# EUROPEAN PATENT APPLICATION

(11) **EP 3 905 781 A1**
(43) Date of publication of application: **03.11.2021**
(21) Application number: 20172490.3
(22) Date of filing: 30.04.2020
(51) Int. Cl.: H04W 36/14, H04W 36/08, H04W 36/00, H04W 36/18, H04W 36/30

(54) **USER EQUIPMENT AND BASE STATION**

(71) Applicant: Panasonic Intellectual Property Corporation of America, Torrance, CA 90503 (US)
(72) Inventor: TAO, Ming-Hung, 63225 Langen, (DE); SUZUKI, Hidetoshi, Osaka-shi,, Osaka 540-6207 (JP); SHAH, Rikin, 63225 Langen, (DE); KUANG, Quan, 63225 Langen, (DE); NISHIO, Akihiko, Osaka-shi,, Osaka 540-6207 (JP); TEO, Tiong Hou, 469332 Singapore (SG)
(74) Representative: Grünecker Patent- und Rechtsanwälte PartG mbB

(57) **Abstract**

The present disclosure relates to a user equipment (UE), comprising the following. A receiver of the UE receives, from a present base station, a delta common configuration indication, indicating a difference between a present common configuration and a target common configuration. The present common configuration is used by the UE for communication with a present base station that controls a present radio cell in which the UE is located. The target common configuration is usable by the UE for communication with a target base station. The receiver receives, from the present base station, differing common configuration elements of the target common configuration, based on the received delta common configuration indication. The differing common configuration elements are different between the present common configuration and the target common configuration. The receiver receives, from the present base station, a target individual configuration to be used for communication with the target base station.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of TR 38.913 version 15.0.0), at least including enhanced mobile broadband (eMBB), ultra-reliable low-latency communications (URLLC), massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

### SUMMARY

One non-limiting and exemplary embodiment facilitates providing procedures for facilitating a UE to perform an improve configuration procedure.

In an embodiment, the techniques disclosed here feature a user equipment comprising the following. A receiver of the UE receives, from a present base station, a delta common configuration indication, indicating a difference between a present common configuration and a target common configuration. The present common configuration is used by the UE for communication with a present base station that controls a present radio cell in which the UE is located. The target common configuration is usable by the UE for communication with a target base station. The receiver receives, from the present base station, differing common configuration elements of the target common configuration, based on the received delta common configuration indication. The differing common configuration elements are different between the present common configuration and the target common configuration. The receiver receives, from the present base station, a target individual configuration to be used by the UE for communication with the target base station.

It should be noted that general or specific embodiments may be implemented as a system, a method, an integrated circuit, a computer program, a storage medium, or any selective combination thereof.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6**: illustrates the RRC states and possible RRC state changes,
- **Fig. 7**: illustrates an exemplary NG RAN architecture based on a transparent satellite,
- **Fig. 8**: illustrates an exemplary NG RAN architecture based on a regenerative satellite,
- **Fig. 9**: illustrates a signaling exchange diagram for a handover procedure as defined in 5G NR,
- **Fig. 10**: illustrates an exemplary NG RAN architecture based on a transparent satellite,
- **Fig. 11**: illustrates an exemplary NG RAN architecture based on a regenerative satellite,
- **Fig. 12**: illustrates a handover scenario of a UE between two satellites for Earth-fixed cells,
- **Fig. 13**: illustrates a handover scenario of a UE between two satellites for Earth-moving cells,
- **Fig. 14**: illustrates how the projected cell cast by a moving satellite moves and sequentially covers different UEs at different times and further illustrates segments of the projected cell where UEs are handed out and where UEs are handed in,
- **Fig. 15**: illustrates an exemplary and simplified structure of a UE and gNB,
- **Fig. 16**: illustrates a structure of the UE according to an exemplary implementation of an improved configuration procedure,
- **Fig. 17**: is a flow diagram for the UE behavior, according to an exemplary implementation of the improved configuration procedure,
- **Fig. 18**: illustrates a structure of the base station according to an exemplary implementation of the improved configuration procedure,
- **Fig. 19**: is a flow diagram for the base station behavior, according to an exemplary implementation of the improved configuration procedure,
- **Fig. 20**: is a basic signaling diagram for an exemplary implementation of the improved configuration procedure,
- **Fig. 21**: is a signaling diagram illustrating a signaling exchange between the UE, serving gNB and target gNB according to an exemplary implementation of the improved configuration procedure,
- **Fig. 22**: is a signaling diagram illustrating a signaling exchange between the UE, serving gNB and target gNB according to an exemplary implementation of the improved configuration and handover procedure, where the target individual configuration is provided to the UE in a handover command message similar to a legacy handover,
- **Fig. 23, 24**: are signaling diagrams illustrating a signaling exchange between the UE, serving gNB and target gNB according to an exemplary implementation of the improved configuration and handover procedure, where the target individual configuration is provided to the UE during a RACH procedure performed by the UE with the serving gNB, and
- **Fig. 25**: is a signaling diagram illustrating a signaling exchange between the UE, serving gNB and target gNB according to an exemplary implementation of the improved configuration and handover procedure, where the target individual configuration is provided to the UE together with user data.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

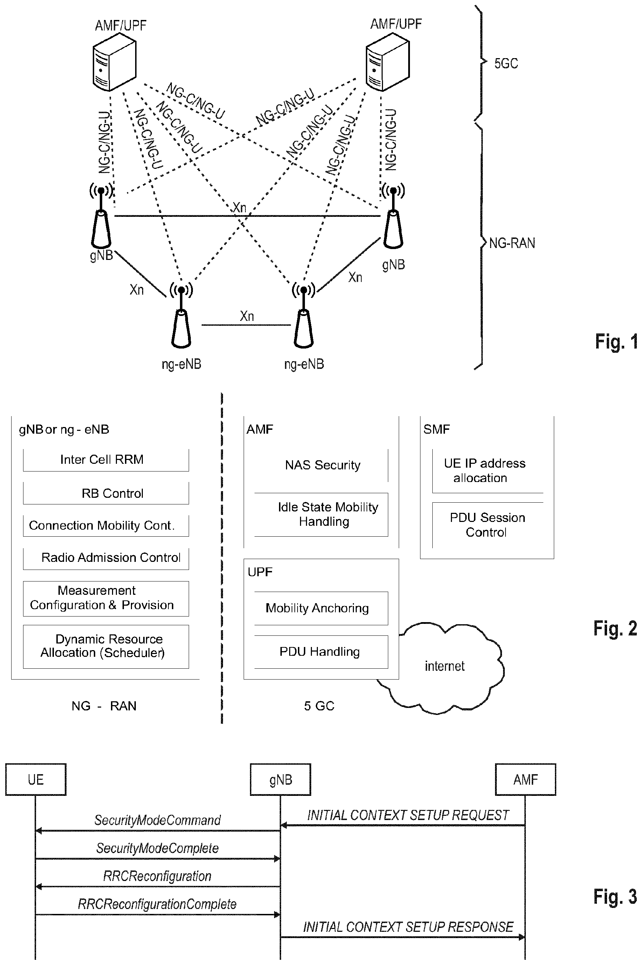

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.0.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.0.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

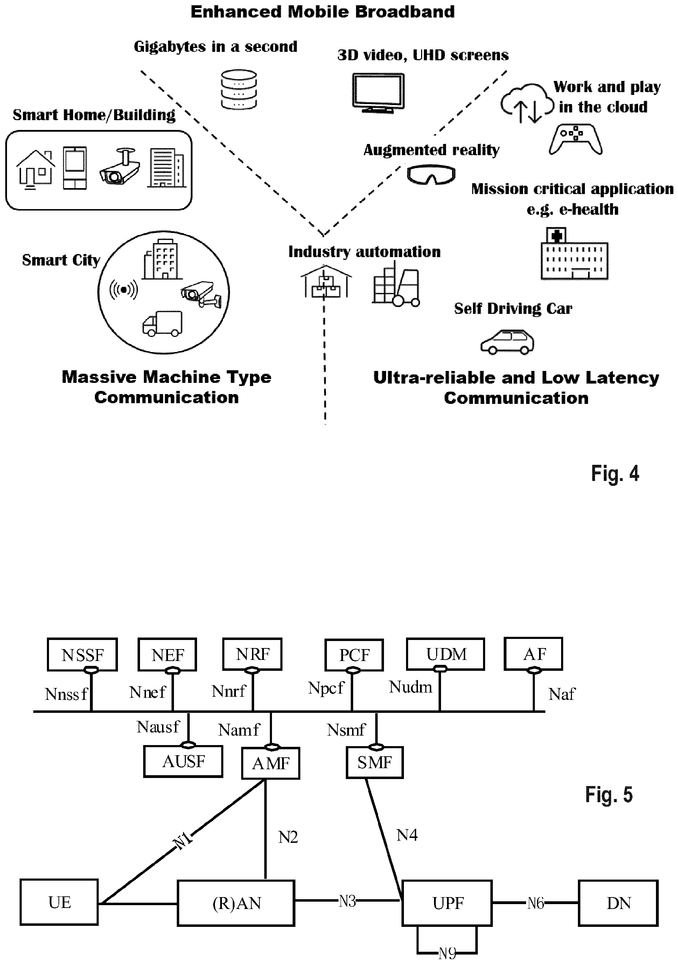

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 15.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.3.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

### RRC States (RRC_Connected, RRC_Inactive)

In LTE, the RRC state machine consisted of only two states, the RRC idle state (mainly characterized by high power savings, UE autonomous mobility and no established UE connectivity towards the core network) and the RRC connected state in which the UE can transmit user plane data while mobility is network-controlled to support lossless service continuity. In connection with 5G NR, the LTE-related RRC state machine may also be extended with an inactive state (see e.g. TS 38.331 v15.8.0, Figure 4.2.1-2), similar to the NR 5G as explained in the following.

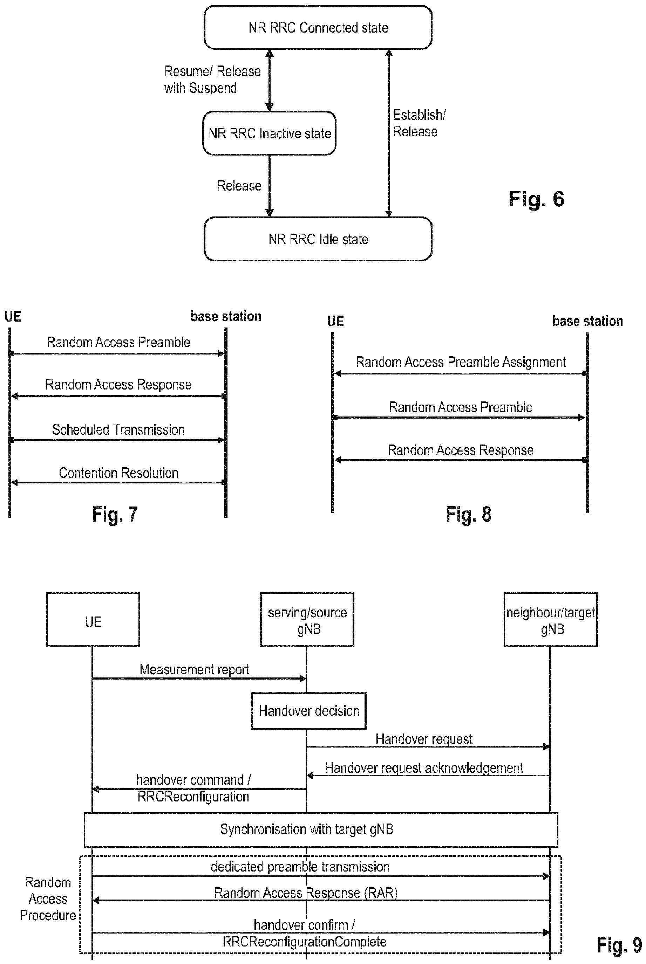

The RRC in NR 5G (see TS 38.331 v15.8.0, section 4) supports the following three states, RRC Idle, RRC Inactive, and RRC Connected. A UE is either in RRC_CONNECTED state or in RRC_INACTIVE state when an RRC connection has been established. If this is not the case, i.e. no RRC connection is established, the UE is in RRC_IDLE state. The following state transitions are possible as illustrated in **Fig. 6****:**
- from RRC_IDLE to RRC_CONNECTED, following e.g. the "connection establishment" procedure;
- from RRC_CONNECTED to RRC_IDLE, following e.g. the "connection release" procedure;
- from RRC_CONNECTED to RRC_INACTIVE, following e.g. the "connection release with suspend" procedure;
- from RRC_INACTIVE to RRC_CONNECTED, following e.g. the "connection resume" procedure;
- from RRC_INACTIVE to RRC_IDLE (uni-directional), following e.g. the "connection release" procedure.

The new RRC state, RRC Inactive, is defined for the new radio technology of 5G 3GPP, so as to provide benefits when supporting a wider range of services such as the eMBB (enhanced Mobile Broadband), mMTC (massive Machine Type Communications) and URLLC (Ultra-Reliable and Low-Latency Communications) which have very different requirements in terms of signalling, power saving, latency etc. The new RRC Inactive state shall thus be designed to allow minimizing signaling, power consumption and resource costs in the radio access network and core network while still allowing e.g. to start data transfer with low delay.

### Random Access procedure

Similar to LTE, 5G NR provides a RACH (Random Access Channel) procedure (or simply random access procedure). For instance, the RACH procedure can be used by the UE to access a cell it has found. The RACH procedure can also be used in other contexts within NR, for example:
- For handover, when synchronization is to be established to a new cell; e.g. first, the contention-free RACH procedure, and if then necessary, a contention-based RACH procedure;
- To reestablish uplink synchronization to the current cell if synchronization has been lost due to a too long period without any uplink transmission from the device;
- To request uplink scheduling if no dedicated scheduling request resource has been configured for the device.

There are numerous events that may trigger the UE to perform a random access procedure (see 3GPP TS 38.300, v16.0.0 section 9.2.6).

A mobile terminal can be scheduled for uplink transmission, if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

There can be two types of random access procedures allowing access to be either contention based, i.e. implying an inherent risk of collision, or contention free (non-contention based). An exemplary definition of a random access procedure can be found in 3GPP TS 38.321, v15.8.0 section 5.1.

The RACH procedure will be described in the following in more detail, with reference to **Fig. 7 and 8****.** In the following, the contention-based random access procedure is being described in more detail with respect to **Fig. 7****.** This procedure consists of four "steps", and thus can be termed for example as a 4-step RACH procedure. First, the user equipment transmits a random access preamble on the Physical Random Access Channel (PRACH) to the base station (i.e. message 1 of the RACH procedure). After the base station has detected a RACH preamble, it sends a Random Access Response (RAR) message (message 2 of the RACH procedure) on the PDSCH (Physical Downlink Shared Channel) addressed on the PDCCH with the (Random Access) RA-RNTI identifying the time-frequency and slot in which the preamble was detected. If multiple user equipment transmitted the same RACH preamble in the same PRACH resource, which is also referred to as collision, they would receive the same random access response message. The RAR message may convey the detected RACH preamble, a timing alignment command (TA command) for synchronization of subsequent uplink transmissions based on the timing of the received preamble, an initial uplink resource assignment (grant) for the transmission of the first scheduled transmission and an assignment of a Temporary Cell Radio Network Temporary Identifier (T-CRNTI). This T-CRNTI is used by the base station to address the mobile(s) whose RACH preamble was detected until the RACH procedure is finished, since the "real" identity of the mobile at this point is not yet known by the base station.

The user equipment monitors the PDCCH for reception of the random access response message within a given time window (e.g. termed RAR reception window), which can be configured by the base station. In response to the RAR message received from the base station, the user equipment transmits the first scheduled uplink transmission on the radio resources assigned by the grant within the random access response. This scheduled uplink transmission conveys the actual message with certain functionality such as the RRC Connection Request, a RRC Resume Request or the buffer status report.

In case of a preamble collision having occurred in the first message of the RACH procedure, i.e. multiple user equipment have sent the same preamble on the same PRACH resource, the colliding user equipments will receive the same T-CRNTI within the random access response and will also collide in the same uplink resources when transmitting their scheduled transmission in the third step of the RACH procedure. In case the scheduled transmission from one user equipment is successfully decoded by base station, the contention remains unsolved for the other user equipment(s). For resolution of this type of contention, the base station sends a contention resolution message (a fourth message) addressed to the C-RNTI or Temporary C-RNTI. This concludes the procedure.

**Fig. 8** is illustrating the contention-free random access procedure, which is simplified in comparison to the contention-based random access procedure. The base station provides in a first step the user equipment with the dedicated preamble to use for random access so that there is no risk of collisions, i.e. multiple user equipments transmitting the same preamble. This results in a faster procedure, which is particularly important for handover. Accordingly, the user equipment is subsequently sending the preamble that was signaled by the base station in the uplink on a PRACH resource, as the first step of the contention-free RACH procedure. The UE then waits for a response in the form of a Random Access Response (RAR) message from the gNB. Once the RAR message is received, the UE checks e.g. whether the random access preamble identifier matches the preamble that was sent and, if so, it applies the timing advance and synchronizes with the gNB. Since the case that multiple UEs are sending the same preamble is avoided for a contention-free random access, essentially, a contention-free random access procedure is finished after having successfully received the random access response by the UE.

3GPP is also studying a 2-step (contention-based) RACH procedure for 5G NR, where a message 1 (termed as MSGA), that corresponds to messages 1 and 3 in the four-step LTE/NR RACH procedure, is transmitted at first. The MSGA of the 2-step RACH type includes a preamble on the Physical Random Access Channel (PRACH) and a payload on the Physical Uplink Shared Channel (PUSCH). After MSGA transmission, the UE monitors for a response from the gNB within a configured time window. Then, the gNB will respond with a message 2 (termed as MSGB), corresponding to messages 2 and 4 of the 4-step LTE/NR RACH procedure. This msgB can include e.g. a Success random access response (RAR), a Fallback RAR, and optionally a backoff indication. If contention resolution is successful upon receiving the Success RAR, the UE ends the random access procedure; while if Fallback RAR is received in MSGB, the UE performs message 3 transmission (as in 4-step RACH procedure) and monitors contention resolution. Some further exemplary assumptions are made for the 2-step RACH procedure, such as that the UE, after deciding on the RACH type (e.g. the 2-step RACH), keeps retrying that same RACH type until failure. But there may be also the possibility that the UE can switch to the 4-step RACH procedure after certain reattempts of transmitting MSGA.

Moreover, the network may semi-statically determine radio resources, to be used for performing the 2-step RACH procedure and the 4-step RACH procedure, that are exclusive from one another. The radio resources used for transmitting the first message in the RACH procedure include at least the RACH occasion as well as the preambles. For instance, in the 2-step RACH procedure, the first message msgA uses not only the PRACH resource (e.g. the RACH occasion and preamble) but also the associated PUSCH resources.

### Handover procedure

A typical and simplified handover is illustrated in **Fig. 9** and explained briefly in the following. A handover of the UE involves that the source base station takes the decision whether to hand over the UE or not to a neighbouring radio cell as the target of the handover. A decision to handover a UE from a source cell to a target cell is typically taken by the source gNB, e.g. based on measurement results from the UE (carried in one or more measurement reports) (illustrated in Fig. 9 as a first message that is exchanged).

The handover is then prepared (preparation phase) between the two involved base stations, source and target base station, by the source gNB transmitting a handover request message to the target base station and by the target gNB responding with a Handover request acknowledgement message. Such a preparation phase of the handover allows the neighbour cell to decide whether it has the capacity to accept a further UE (e.g. acknowledging the handover) and reserving resources for the UE to be handed over.

In the execution phase, the UE is then instructed through a handover command message (e.g. the RRCReconfiguration message) to switch from the source cell to the target cell, which e.g. involves reconfiguration of the UE's radio resources so as to establish a connection with the target base station of the target radio cell. The UE accordingly performs the reconfiguration and attaches to the new target base station, which comprises a synchronization and performing a (e.g. contention-free) random access procedure. For instance, the synchronization may comprise that the UE acquires the synchronization signals (e.g. Primary Synchronization Signal, PSS, and Secondary Synchronization Signal, SSS) typically used to obtain the cell identity and frame timing of the target cell, thereby achieving time and frequency synchronization. The random access procedure (e.g. as explained above in connection with the contention-free RACH of Fig. 8) is performed by the UE, e.g. in order to acquire the timing advance value and to obtain uplink resources for uplink transmission with the RAR message. It consists at least in transmitting the RACH preamble (e.g. a dedicated preamble, in line with what the preamble indicated in the handover command message for a contention-free RACH), the reception of the Random Access Response message (e.g. including an uplink grant), and finally as the third and last step of the random access procedure, the UE confirms that is has completed the reconfiguration and access to the target cell by transmitting a handover confirm message (RRCReconfigurationComplete message) to the target gNB.

An exemplary implementation of such a handover procedure is defined for 5G NR for RRC Connected mobility in the 3GPP Technical Standard TS 38.300, section 9.2.3.

The handover command message may include information of the target cell, such as the target cell ID and configuration information to be able to connect the target cell, as well as handover-accept and handover-reject conditions.

As an exemplarily and simplified overview, the RRCReconfiguration message may contain:
- Target cell ID
- New C-RNTI
- Target gNB security algorithm identifiers for the selected security algorithms
- Dedicated RACH resources
- Common RACH resources
- Association between RACH resources and SSB(s)
- System information of the target cell

According to more detailed exemplary definition of the possible content of the handover command message, 5G NR defines the RRCReconfiguration message of 3GPP TS 38.331 v15.9.0, section 6.2.2, provided below. It may convey information e.g. for measurement configuration, mobility control, radio resource configuration (including e.g. radio bearers, MAC main configuration and physical channel configuration) as well as Access Stratum (AS) security configuration. The respective Information Elements (IE) are defined in TS 38.331 as well, such as the RRCReconfiguration-IEs radioBearerConfig, secondary-CellGroup, measConfig, masterCellGroup, fullconfig, etc.

### RRCReconfiguration

The *RRCReconfiguration* message is the command to modify an RRC connection. It may convey information for measurement configuration, mobility control, radio resource configuration (including RBs, MAC main configuration and physical channel configuration) and AS security configuration.

### Signalling radio bearer: SRB1 or SRB3

RLC-SAP: AM
Logical channel: DCCH
Direction: Network to UE

### RRCReconfiguration message

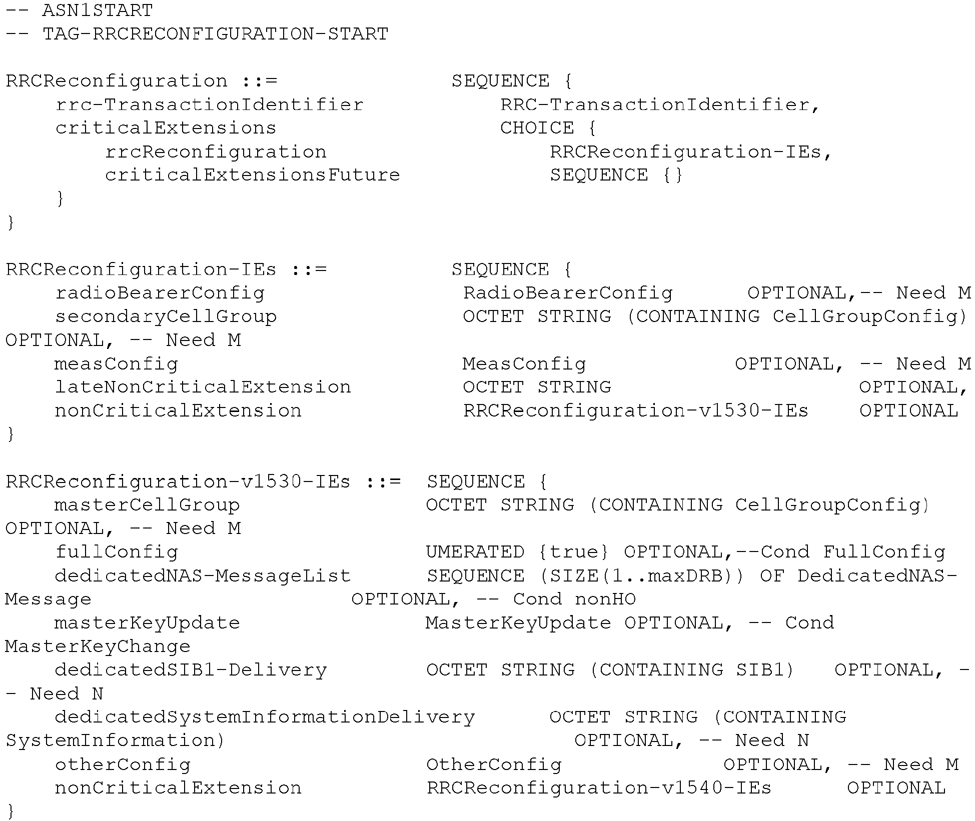

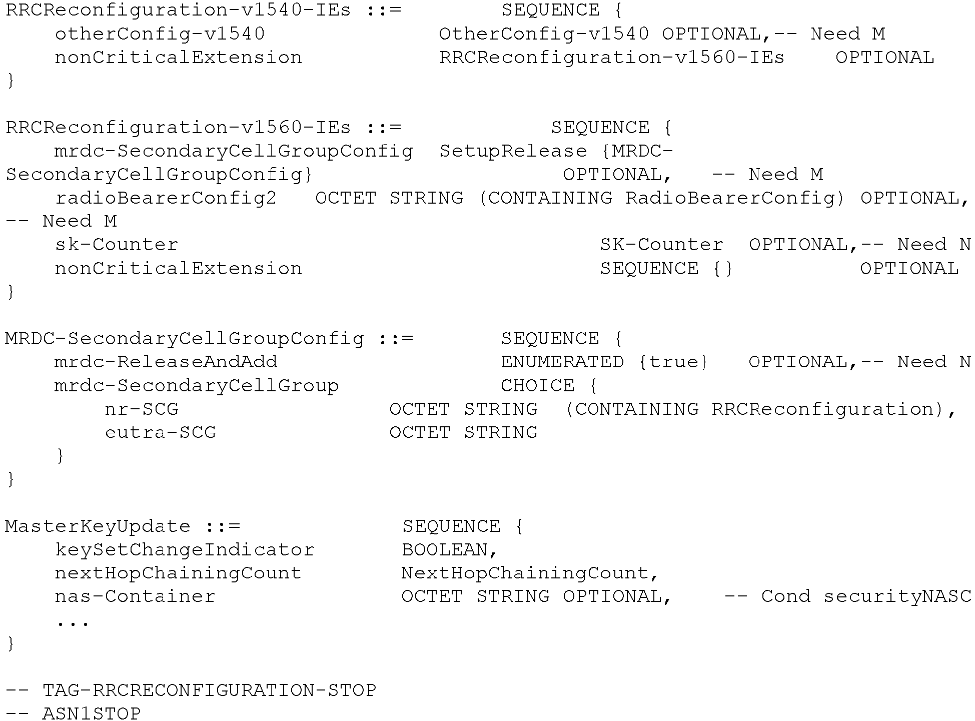

| ***RRCReconfiguration-IEs* field descriptions** |
|---|
| ***dedicatedNAS-MessageList*** |
| This field is used to transfer UE specific NAS layer information between the network and the UE. The RRC layer is transparent for each PDU in the list. |
| ***dedicatedSIB1-Delivery*** |
| This field is used to transfer *SIB1* to the UE. The field has the same values as the corresponding configuration in *servingCellConfigCommon.* |
| ***dedicatedSystemInformationDelivery*** |
| This field is used to transfer *SIB6, SIB7, SIB8* to the UE. |
| ***fullConfig*** |
| Indicates that the full configuration option is applicable for the *RRCReconfiguration* message for intra-system intra-RAT HO. For inter-RAT HO from E-UTRA to NR, *fullConfig* indicates whether or not delta signalling of SDAP/PDCP from source RAT is applicable. This field is absent when the *RRCReconfiguration* message is transmitted on SRB3, and in an *RRCReconfiguration* message contained in another *RRCReconfiguration* message (or *RRCConnectionReconfiguration* message, see TS 36.331 [10]) transmitted on SRB1. |
| ***keySetChangelndicator*** |
| Indicates whether UE shall derive a new K_{gNB}. If *reconfigurationWithSync* is included, value *true* indicates that a K_{gNB} key is derived from a K_{AMF} key taken into use through the latest successful NAS SMC procedure, or N2 handover |
| procedure with K_{AMF} change, as described in TS 33.501 [11] for K_{gNB} re-keying. Value *false* indicates that the new K_{gNB} key is obtained from the current K_{gNB} key or from the NH as described in TS 33.501 [11]. |
| ***masterCellGroup*** |
| Configuration of master cell group. |
| ***mrdc-ReleaseAndAdd*** |
| This field indicates that the current SCG configuration is released and a new SCG is added at the same time. |
| ***mrdc-SecondaryCellGroup*** |
| Includes an RRC message for SCG configuration in NR-DC or NE-DC. For NR-DC (nr-SCG), *mrdc-SecondaryCellGroup* contains the *RRCReconfiguration* message as generated (entirely) by SN gNB. In this version of the specification, the RRC message can only include fields *secondaryCellGroup* and *measConfig.* For NE-DC (eutra-SCG), *mrdc-SecondaryCellGroup* includes the E-UTRA *RRCConnectionReconfiguration* message as specified in TS 36.331 [10]. In this version of the specification, the E-UTRA RRC message can only include the field *scg-Configuration.* |
| ***nas-Container*** |
| This field is used to transfer UE specific NAS layer information between the network and the UE. The RRC layer is transparent for this field, although it affects activation of AS security after inter-system handover to NR. The content is defined in TS 24.501 [23]. |
| ***nextHopChainingCount*** |
| Parameter NCC: See TS 33.501 [11] |
| ***otherConfig*** |
| Contains configuration related to other configurations. |
| ***radioBearerConfig*** |
| Configuration of Radio Bearers (DRBs, SRBs) including SDAP/PDCP. In EN-DC this field may only be present if the *RRCReconfiguration* is transmitted over SRB3. |
| ***radioBearerConfig2*** |
| Configuration of Radio Bearers (DRBs, SRBs) including SDAP/PDCP. This field can only be used if the UE supports NR-DC or NE-DC. |
| ***secondaryCellGroup*** |
| Configuration of secondary cell group ((NG)EN-DC or NR-DC). This field can only be present in an *RRCReconfiguration* message is transmitted on SRB3, and in an *RRCReconfiguration* message contained in another *RRCReconfiguration* message (or *RRCConnectionReconfiguration* message, see TS 36.331 [10]) transmitted on SRB1. |
| ***sk-Counter*** |
| A counter used upon initial configuration of S-K_{gNB} or S-K_{eNB}, as well as upon refresh of S-K_{gNB} or S-K_{eNB}. This field is always included either upon initial configuration of an NR SCG or upon configuration of the first RB with *keyToUse* set to *secondary,* whichever happens first. This field is absent if there is neither any NR SCG nor any RB with *keyToUse* set to *secondary.* |

| **Conditional Presence** | **Explanation** |
|---|---|
| *nonHO* | The field is absent in case of reconfiguration with sync within NR or to NR; otherwise it is optionally present, need N. |
| *securityNASC* | This field is mandatory present in case of inter system handover. Otherwise the field is optionally present, need N. |
| *MasterKeyChange* | This field is mandatory present in case *masterCellGroup* includes *ReconfigurationWithSync* and *RadioBearerConfig* includes *SecurityConfig* with *SecurityAlgorithmConfig,* indicating a change of the AS security algorithms associated to the master key. If *ReconfigurationWithSync* is included for other cases, this field is optionally present, need N. Otherwise the field is absent. |
| *FullConfig* | The field is mandatory present in case of inter-system handover from E-UTRA/EPC to NR. It is optionally present, Need N, during reconfiguration with sync and also in first reconfiguration after reestablishment; or for intra-system handover from E-UTRA/5GC to NR. It is absent otherwise. |

As apparent from the above definition of the RRCReconfiguration message in the 5G NR standards, the masterCellGroup is configured by the IE CellGroupConfig which is inside the RRCReconfiguration-v1530-IEs. The CellGroupConfig information element is also defined in 3GPP TS 38.331 and is presented in the following.

### CellGroupConfig

The *CellGroupConfig* IE is used to configure a master cell group (MCG) or secondary cell group (SCG). A cell group comprises of one MAC entity, a set of logical channels with associated RLC entities and of a primary cell (SpCell) and one or more secondary cells (SCells).

### CellGroupConfig information element

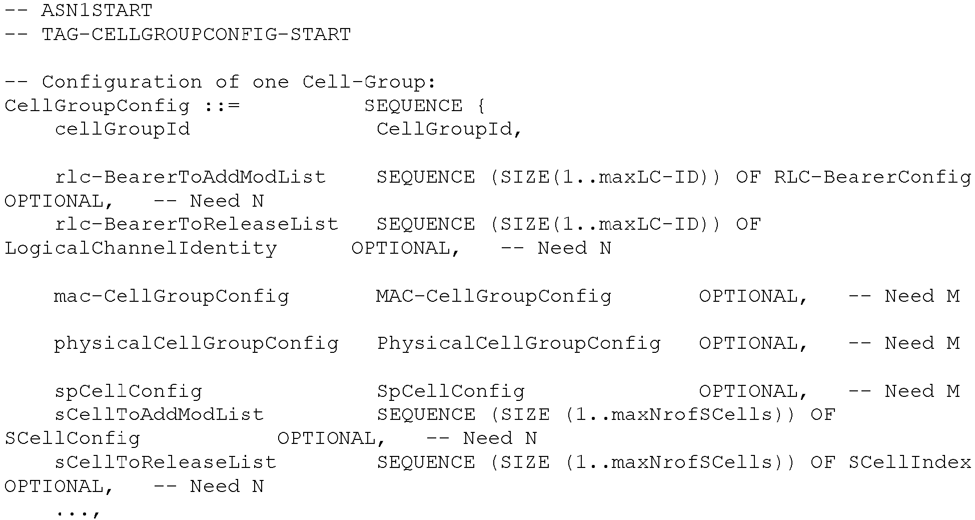

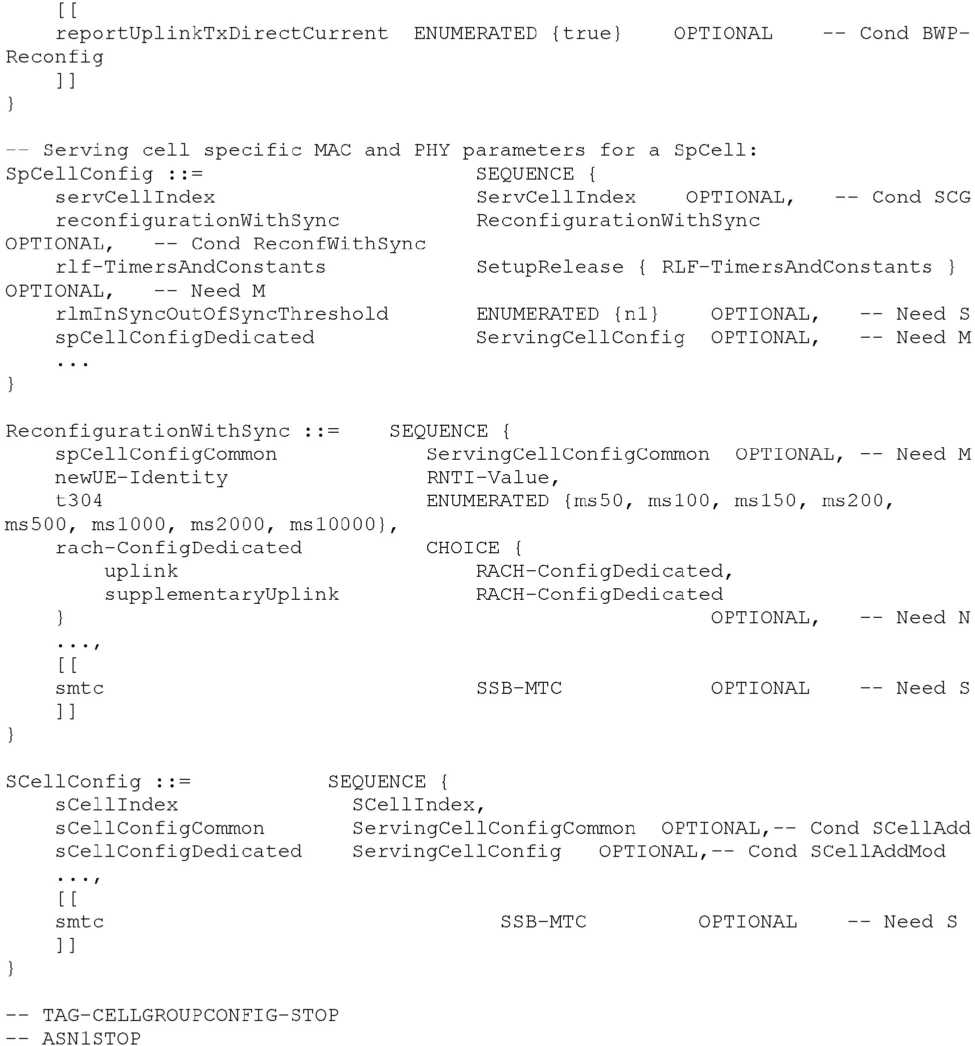

| ***CellGroupConfig* field descriptions** |
|---|
| ***mac-CellGroupConfig*** |
| MAC parameters applicable for the entire cell group. |

| ***rlc-BearerToAddModList*** |
|---|
| Configuration of the MAC Logical Channel, the corresponding RLC entities and association with radio bearers. |

| ***reportUplinkTxDirectCurrent*** |
|---|
| Enables reporting of uplink and supplementary uplink Direct Current location information upon BWP configuration and reconfiguration. This field is only present when the BWP configuration is modified or any serving cell is added or removed. This field is absent in the IE *CellGroupConfig* when provided as part of *RRCSetup* message. If UE is configured with SUL carrier, UE reports both UL and SUL Direct Current locations. |

| ***rlmInSyncOutOfSyncThreshold*** |
|---|
| BLER threshold pair index for IS/OOS indication generation, see TS 38.133 [14], table 8.1.1-1. *n1* corresponds to the value 1. When the field is absent, the UE applies the value 0. Whenever this is reconfigured, UE resets N310 and N311, and stops T310, if running. Network does not include this field. |

| ***sCellToA ddModList*** |
|---|
| List of seconary serving cells (SCells) to be added or modified. |

| ***sCellToReleaseList*** |
|---|
| List of secondary serving cells (SCells) to be released. |

| ***spCellConfig*** |
|---|
| Parameters for the SpCell of this cell group (PCell of MCG or PSCell of SCG). |

| ***ReconfigurationWithSync* field descriptions** |
|---|
| ***rach-ConfigDedicated*** |
| Random access configuration to be used for the reconfiguration with sync (e.g. handover). The UE performs the RA according to these parameters in the *firstActiveUplinkBWP* (see *UplinkConfig*)*.* |

| ***smtc*** |
|---|
| The SSB periodicity/offset/duration configuration of target cell for NR PSCell change and NR PCell change. The network sets the *periodicityAndOffset* to indicate the same periodicity as *ssb-periodicityServingCell* in *spCellConfigCommon.* For case of NR PCell change, the *smtc* is based on the timing reference of source PCell. For case of NR PSCell change, it is based on the timing reference of source PSCell. If the field is absent, the UE uses the SMTC in the *measObjectNR* having the same SSB frequency and subcarrier spacing, as configured before the reception of the RRC message. |

| ***SCellConfig* field descriptions** |
|---|
| ***smtc*** |
| The SSB periodicity/offset/duration configuration of target cell for NR SCell addition. The network sets the *periodicityAndOffset* to indicate the same periodicity as *ssb-periodicityServingCell* in *sCellConfigCommon.* The *smtc* is based on the timing of the SpCell of associated cell group. In case of inter-RAT handover to NR, the timing reference is the NR PCell. In case of intra-NR PCell change (standalone NR) or NR PSCell change (EN-DC), the timing reference is the target SpCell. If the field is absent, the UE uses the SMTC in the *measObjectNR* having the same SSB frequency and subcarrier spacing, as configured before the reception of the RRC message. |

| ***SpCellConfig* field descriptions** | |
|---|---|
| ***reconfigurationWithSync*** | |
| Parameters for the synchronous reconfiguration to the target SpCell. | |

| ***rlf-TimersAndConstants*** | |
|---|---|
| Timers and constants for detecting and triggering cell-level radio link failure. For the SCG, *rlf-TimersAndConstants* can only be set to *setup* and is always included at SCG addition. | |

| ***servCellIndex*** | |
|---|---|
| Serving cell ID of a PSCell. The PCell of the Master Cell Group uses ID = 0. | |

| **Conditional Presence** | **Explanation** |
|---|---|
| *BWP-Reconfig* | The field is optionally present, Need N, if the BWPs are reconfigured or if serving cells are added or removed. Otherwise it is absent. |
| *ReconfWithSync* | The field is mandatory present in case of SpCell change, PSCell addition, update of required SI for PSCell and AS security key change; otherwise it is optionally present, need M. The field is absent in *RRCResume* and *RRCSetup* messages. |
| *SCellAdd* | The field is mandatory present upon SCell addition; otherwise it is absent, Need M. |
| *SCellAddMod* | The field is mandatory present upon SCell addition; otherwise it is optionally present, need M. |
| *SCG* | The field is mandatory present in an *SpCellConfig* for the PSCell. It is absent otherwise. |

Inside the CellGroupInfo, the *"reconfigurationWithSync"* information element is relevant to a handover procedure, in that it provides parameters for the synchronous reconfiguration to the target radio cell, such as the new UE Identity (RNTI-Value), the ServingCellConfigCommon, and the rach-ConfigDedicated (e.g. dedicated uplink preamble for RACH).

On the other hand, inside the reconfigurationWithSync information element there is the *"spCellConfigCommon* - *ServingCellConfigCommon"* information element, which is relevant to handover in that it contains some common configuration (common to all UEs) to access the radio cell. This *ServingCellConfigCommon* information element is also defined in 3GPP TS 38.331 and is presented in the following.

### -ServingCellConfigCommon

The IE *ServingCellConfigCommon* is used to configure cell specific parameters of a UE's serving cell. The IE contains parameters which a UE would typically acquire from SSB, MIB or SIBs when accessing the cell from IDLE. With this IE, the network provides this information in dedicated signalling when configuring a UE with a SCells or with an additional cell group (SCG). It also provides it for SpCells (MCG and SCG) upon reconfiguration with sync.

### ServingCellConfigCommon information element

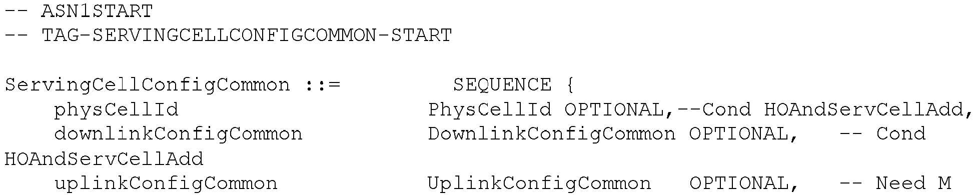

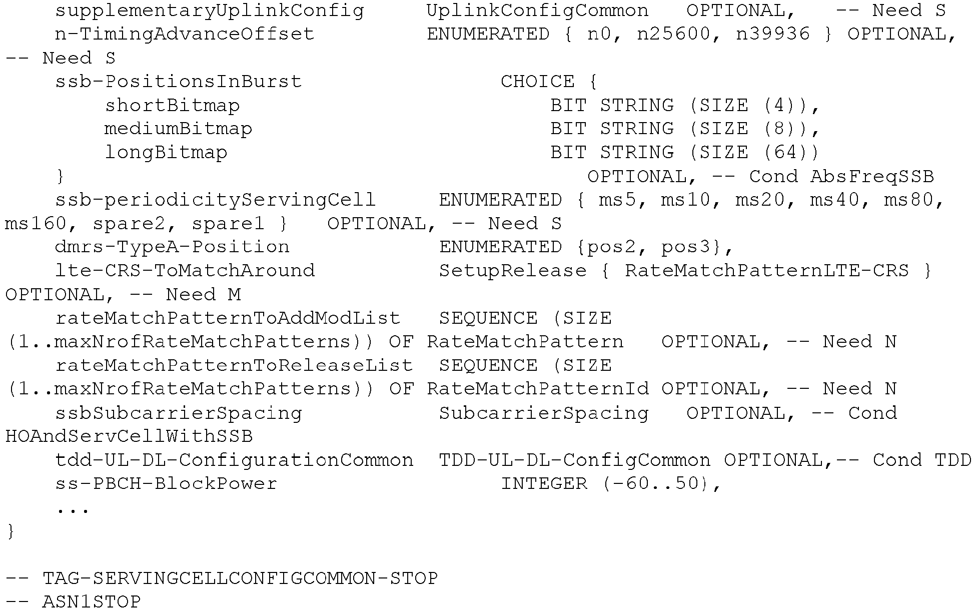

| ***ServingCellConfigCommon* field descriptions** |
|---|
| ***dmrs-TypeA-Position*** |
| Position of (first) DM-RS for downlink (see TS 38.211 [16], clause 7.4.1.1.1) and uplink (TS 38.211 [16], clause 6.4.1.1.3). |

| ***downlinkConfigCommon*** |
|---|
| The common downlink configuration of the serving cell, including the frequency information configuration and the initial downlink BWP common configuration. The parameters provided herein should match the parameters configured by MIB and SIB1 (if provided) of the serving cell, with the exception of *controlResourceSetZero* and *searchSpaceZero* which can be configured in *ServingCellConfigCommon* even if MIB indicates that they are absent. |

| ***longBitmap*** |
|---|
| Bitmap when maximum number of SS/PBCH blocks per half frame equals to 64 as defined in TS 38.213 [13], clause 4.1. |

| ***Ite-CRS-ToMatchAround*** |
|---|
| Parameters to determine an LTE CRS pattern that the UE shall rate match around. |

| ***mediumBitmap*** |
|---|
| Bitmap when maximum number of SS/PBCH blocks per half frame equals to 8 as defined in TS 38.213 [13], clause 4.1. |

| ***n-TimingAdvanceOffset*** |
|---|
| The N_TA-Offset to be applied for all uplink transmissions on this serving cell. If the field is absent, the UE applies the value defined for the duplex mode and frequency range of this serving cell. See TS 38.133 [14], table 7.1.2-2. |

| ***rateMatchPatternToAddModList*** |
|---|
| Resources patterns which the UE should rate match PDSCH around. The UE rate matches around the union of all resources indicated in the rate match patterns. Rate match patterns defined here on cell level apply only to PDSCH of the same numerology (see TS 38.214 [19], clause 5.1.4,1). |

| ***shortBitmap*** |
|---|
| Bitmap when maximum number of SS/PBCH blocks per half frame equals to 4 as defined in TS 38.213 [13], clause 4.1. |

| ***ss-PBCH-BlockPower*** |
|---|
| Average EPRE of the resources elements that carry secondary synchronization signals in dBm that the NW used for SSB transmission, see TS 38.213 [13], clause 7. |

| ***ssb-periodicityServingCell*** |
|---|
| The SSB periodicity in ms for the rate matching purpose. If the field is absent, the UE applies the value ms5. (see TS 38.213 [13], clause 4.1) |

| ***ssb-PositionslnBurst*** |
|---|
| Indicates the time domain positions of the transmitted SS-blocks in a half frame with SS/PBCH blocks as defined in TS 38.213 [13], clause 4.1. The first/ leftmost bit corresponds to SS/PBCH block index 0, the second bit corresponds to SS/PBCH block index 1, and so on. Value 0 in the bitmap indicates that the corresponding SS/PBCH block is not transmitted while value 1 indicates that the corresponding SS/PBCH block is transmitted. The network configures the same pattern in this field as in the corresponding field in ServingCellConfigCommonSIB. |

| ***ssbSubcarrierSpacing*** |
|---|
| Subcarrier spacing of SSB. Only the values 15 kHz or 30 kHz (FR1), and 120 kHz or 240 kHz (FR2) are applicable. |

| ***supplementaryUplinkConfig*** |
|---|
| The network configures this field only if *uplinkConfigCommon* is configured. If this field is absent, the UE shall release the *supplementaryUplinkConfig* and the *supplementaryUplink* configured in *ServingCellConfig* of this serving cell, if configured. |

| ***tdd-UL-DL-ConfigurationCommon*** |
|---|
| A cell-specific TDD UL/DL configuration, see TS 38.213 [13], clause 11.1. |

| **Conditional Presence** | **Explanation** |
|---|---|
| *AbsFreqSSB* | The field is absent when *absoluteFrequencySSB* in frequencylnfoDL is absent, otherwise the field is mandatory present. |
| *HOAndServCellAdd* | This field is mandatory present upon SpCell change and upon serving cell (PSCell/SCell) addition. Otherwise, the field is absent. |
| *HOAndServCellWithSSB* | This field is mandatory present upon SpCell change and upon serving cell (SCell with SSB or PSCell) addition. Otherwise, the field is absent. |
| *TDD* | The field is optionally present, Need R, for TDD cells; otherwise it is absent. |

### NR System Information Acquisition

An exemplary implementation of the system information acquisition function in 5G NR that involves PDCCH monitoring, according to the currently standardized version, will be explained in a simplified and abbreviated form in the following.

In 5G NR, system information (SI) is divided into the MIB (Master Information Block) and a number of SIBs (System Information Blocks) (see 3GPP TS 38.331 v15.9.0 e.g. section 5.2, see also 3GPP TS 38.300 v16.0.0 e.g. section 7.3, and also 3GPP TS 38.213 v16.1.0 e.g. section 13). The *MIB* is transmitted on the BCH and includes parameters that are needed to acquire the SIB1 from the cell. The SIB1 is periodically transmitted on the DL-SCH and includes information regarding the availability and scheduling, e.g. mapping of SIBs to SI messages, periodicity, SI-window size of other SIBs with an indication whether one or more SIBs are only provided on demand, and in that case, the configuration needed by the UE to perform the SI request.

The SIB1 message as defined in 3GPP 38.331 is presented in the following:

### SIB1

*SIB1* contains information relevant when evaluating if a UE is allowed to access a cell and defines the scheduling of other system information. It also contains radio resource configuration information that is common for all UEs and barring information applied to the unified access control.
Signalling radio bearer: N/A
RLC-SAP: TM
Logical channels: BCCH
Direction: Network to UE

### SIB1 message

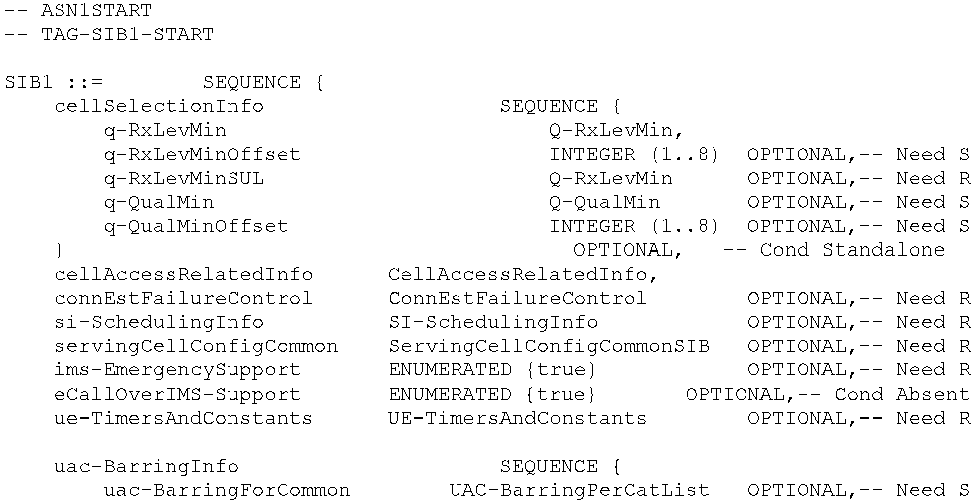

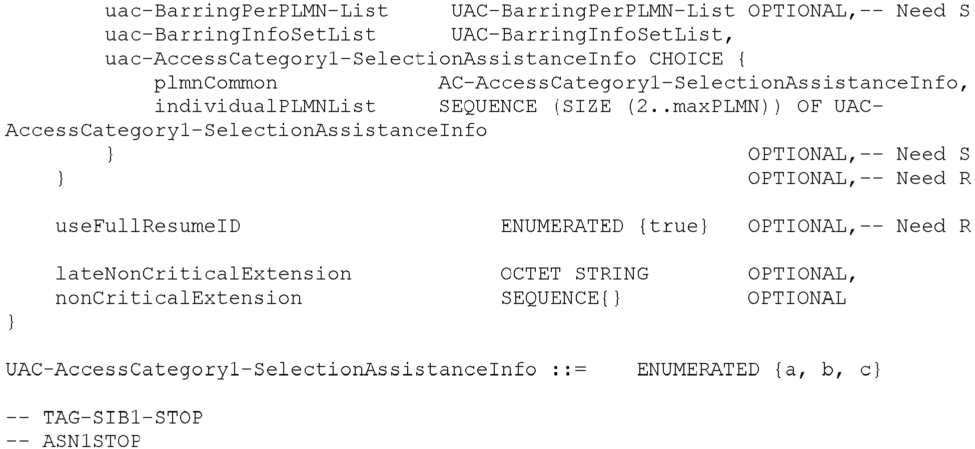

| ***SIB1* field descriptions** |
|---|
| ***cellSelectionlnfo*** |
| Parameters for cell selection related to the serving cell. |

| ***ims-EmergencySupport*** |
|---|
| Indicates whether the cell supports IMS emergency bearer services for UEs in limited service mode. If absent, IMS emergency call is not supported by the network in the cell for UEs in limited service mode. |

| ***q-QualMin*** |
|---|
| Parameter "Q_{qualmin}" in TS 38.304 [20], applicable for serving cell. If the field is absent, the UE applies the (default) value of negative infinity for Q_{qualmin}. |

| ***q-QualMinOffset*** |
|---|
| Parameter "Q_{qualminoffset}" in TS 38.304 [20]. Actual value Qq_{ualminoffset} = field value [dB]. If the field is absent, the UE applies the (default) value of 0 dB for Q_{qualminoffset}. Affects the minimum required quality level in the cell. |

| ***q-RxLevMin*** |
|---|
| Parameter "Qᵣₓₗₑᵥₘᵢₙ" in TS 38.304 [20], applicable for serving cell. |

| ***q-RxLevMinOffset*** |
|---|
| Parameter "Q_{rxlevminoffset}" in TS 38.304 [20]. Actual value Q_{rxlevminoffset} = field value ^{∗} 2 [dB]. If absent, the UE applies the (default) value of 0 dB for Q_{rxlevminoffset}. Affects the minimum required Rx level in the cell. |

| ***q-RxLevMinSUL*** |
|---|
| Parameter "Qᵣₓₗₑᵥₘᵢₙ" in TS 38.304 [20], applicable for serving cell. |

| ***servingCellConfigCommon*** |
|---|
| Configuration of the serving cell. |

| ***uac-AccessCategory1-SelectionAssistanceInfo*** |
|---|
| Information used to determine whether Access Category 1 applies to the UE, as defined in TS 22.261 [25]. |

| ***uac-BarringForCommon*** |
|---|
| Common access control parameters for each access category. Common values are used for all PLMNs, unless overwritten by the PLMN specific configuration provided in *uac-BarringPerPLMN-List.* The parameters are specified by providing an index to the set of configurations (*uac-BarringInfoSetLisi*)*.* UE behaviour upon absence of this field is specified in clause 5.3.14.2. |

| ***ue-TimersAndConstants*** |
|---|
| Timer and constant values to be used by the UE. The cell operating as PCell always provides this field. |

| ***useFullResumeID*** |
|---|
| Indicates which resume identifier and Resume request message should be used. UE uses *fulll-RNTI* and *RRCResumeRequest1* if the field is present, or *shortl-RNTI* and *RRCResumeRequest* if the field is absent. |

| **Conditional Presence** | **Explanation** |
|---|---|
| *Absent* | The field is not used in this version of the specification, if received the UE shall ignore. |
| *Standalone* | The field is mandatory present in a cell that supports standalone operation, otherwise it is absent. |

SIBs other than SIB1 are carried in System Information messages (SI messages), which are transmitted on the DL-SCH. SIBs having the same periodicity can be mapped to the same SI message. Each SI message is transmitted within periodically occurring time-domain windows (referred to as SI-windows with the same length for all SI messages). Each SI message is associated with an SI-window, and the SI-windows of different SI messages do not overlap.

The UE applies the SI acquisition procedure to acquire the information of the Access Stratum (AS) and Non-Access stratum (NAS), and applies to UEs in RRC_IDLE, in RRC_INACTIVE, and in RRC_CONNECTED modes.

### Non-Terrestrial Networks, NTN

In 3GPP, NR-based operation in a non-terrestrial network (NTN) is studied and described (see e.g. 3GPP TR 38.811, Study on New Radio (NR) to support non-terrestrial networks, version 15.0.0, and 3GPP TR 38.821, Solutions for NR to support non-terrestrial networks, version 0.3.0).

Satellites will continue to be the most effective means for reaching areas beyond terrestrial coverage as well as for reaching passengers in trains, aircrafts & vessels. Therefore, including satellites as an integral part of the 5G ecosystem adds resilience. The satellite industry has participated in various committees, including in 3GPP, EC and ITU-T to ensure that satellite systems are integrated as an intrinsic part of the 5G ecosystem. The targets are 1) to support highly available and reliable connectivity using satellites for use cases such as ubiquitous coverage, disaster relief, public safety requirements, emergency response, remote sensor connectivity, broadcast service, etc., 2) to support an air-interface with one-way latency of up to 275 ms when satellite connection is involved, and 3) to support seamless mobility between terrestrial and satellite-based networks with widely varying latencies.

A non-terrestrial network (NTN) refers to a network, or segment of networks, using RF resources on board of a satellite, for instance. Exemplary, NTNs may comprise the following system elements: an NTN-capable terminal, which may refer to a 3GPP UE or a terminal that is specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the Gateway Center space/airborne platform.

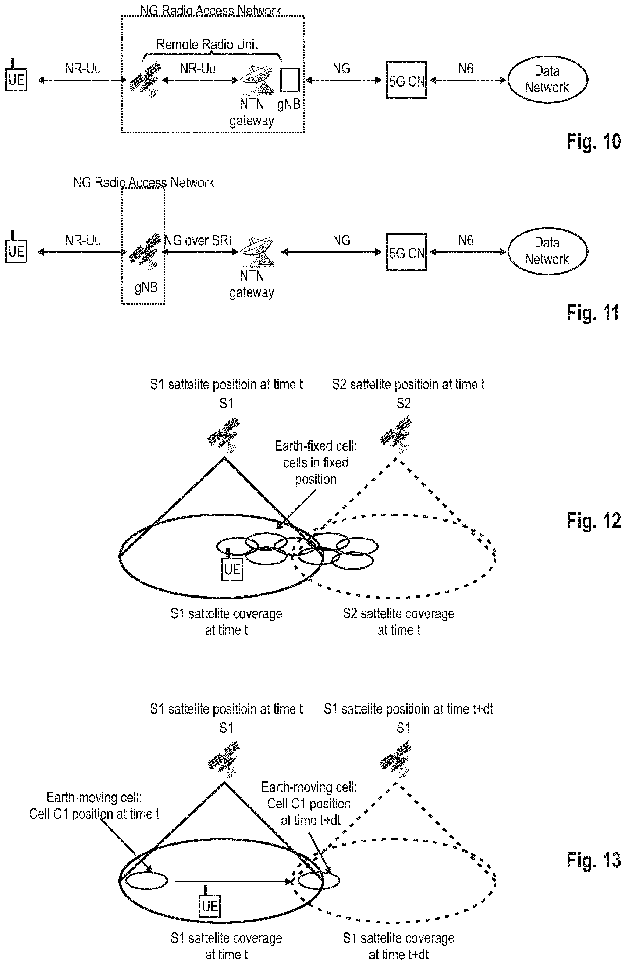

**Fig. 10** illustrates an exemplary NG RAN architecture based on a transparent satellite. According to one exemplary implementation (see TR 38.821 v0.3.0 section 5.1), the satellite payload implements frequency conversion and a Radio Frequency amplifier in both uplink and downlink direction. It corresponds to an analogue RF repeater. Hence, the satellite repeats the NR-Uu radio interface from the feeder link (between the NTN gateway and the satellite) to the service link (between the satellite and the UE) and vice versa. The Satellite Radio Interface (SRI) on the feeder link is the NR-Uu. In other words, the satellite does not terminate NR-Uu.

**Fig. 11** illustrates an exemplary NG RAN architecture based on a regenerative satellite. According to one exemplary implementation (see TR 38.321 v0.3.0 section 5.2), the NG-RAN logical architecture as described in TS 38.401 is used as baseline for NTN scenarios. The satellite payload implements regeneration of the signals received from Earth. The NR-Uu radio interface is on the service link between the UE and the satellite. The Satellite Radio Interface (SRI) is on the feeder link between the NTN gateway and the satellite. SRI (Satellite Radio Interface) is a transport link between NTN GW and satellite.

The satellite payload also provides Inter-Satellite Links (ISL) between satellites. ISL (Inter-Satellite Links) is a transport link between satellites.

There are different types of satellites that provide communications, Low-Earth Orbit (LEO) or Geosynchronous Equatorial Orbit (GEO) (also called geo-stationary) satellites. Geostationary satellites appear fixed as they move at the same angular velocity as the Earth and orbit along a path parallel to Earth's rotation, thereby providing coverage to a specific area. From the ground, GEO satellites appear to be stationary. LEO satellites revolve at an altitude between 160 to 2,000 kilometers (99 to 1,200 miles). A constellation of LEO satellites can provide continuous, global coverage as the satellite moves. Unlike GEO satellites, LEO satellites also fly at a much faster pace because of their proximity to Earth.

There are many applications for GEO satellites, including weather forecasting, satellite radio, and television. Because GEO satellites orbit at such a high altitude, however, there is a longer communication time lag (latency) as the signals travel to and from these satellites. For this reason, many critical communications are handled over LEO satellite networks, which allow for faster connectivity without wires or cables.

LEO satellites can be further differentiated based on whether it has satellite-fixed beams or steerable beams. This differentiation results in an earth-moving or earth-fixed beam footprint (and thus NR cells) on the ground.

**Fig. 12** illustrates an exemplary scenario for Earth-fixed cells, and **Fig. 13** illustrate an exemplary scenario for Earth-moving cells. In the exemplary scenario of Earth-fixed cells in Fig. 12 it can be assumed that the cells are fixated to a certain location on Earth during a certain time duration, e.g. from the time where the satellite S1 (to which these cells belongs to) is at a certain elevation angle over the horizon until the same satellite S1 has reached the same elevation angle at the opposite horizon. At that point in time, another satellite S2 takes over, and all RRC Connected UEs are handed over to a new cell at the new satellite. This can be achieved e.g. with NTN platforms that generate steerable beams whose footprint is fixed on the ground.

In the exemplary scenario of Earth-moving cells in Fig. 13 it can be assumed that the cells follow the satellite coverage and move with the speed of the satellite, e.g. 7.5 km/s. In other words, the cells are moving on the ground.

Different scenarios are defined depending on the type of satellite that is used. This is captured in 3GPP TR 38.821 v0.3.0 section 4.2, which defines six reference scenarios including
- Circular orbiting and notional station keeping platforms.
- Highest RTD constraint
- Highest Doppler constraint
- A transparent and a regenerative payload
- One ISL case and one without ISL. Regenerative payload is mandatory in the case of inter-satellite links.
- Fixed or steerable beams resulting respectively in moving or fixed beam foot print on the ground

A corresponding table of the reference scenarios is provided in the following.

| | Transparent satellite | Regenerative satellite |
|---|---|---|
| GEO based non-terrestrial access network | Scenario A | Scenario B |
| LEO based non-terrestrial access network: steerable beams | Scenario C1 | Scenario D1 |
| LEO based non-terrestrial access network: the beams move with the satellite | Scenario C2 | Scenario D2 |

### Further improvements

The inventors have identified problems in connection with the above.

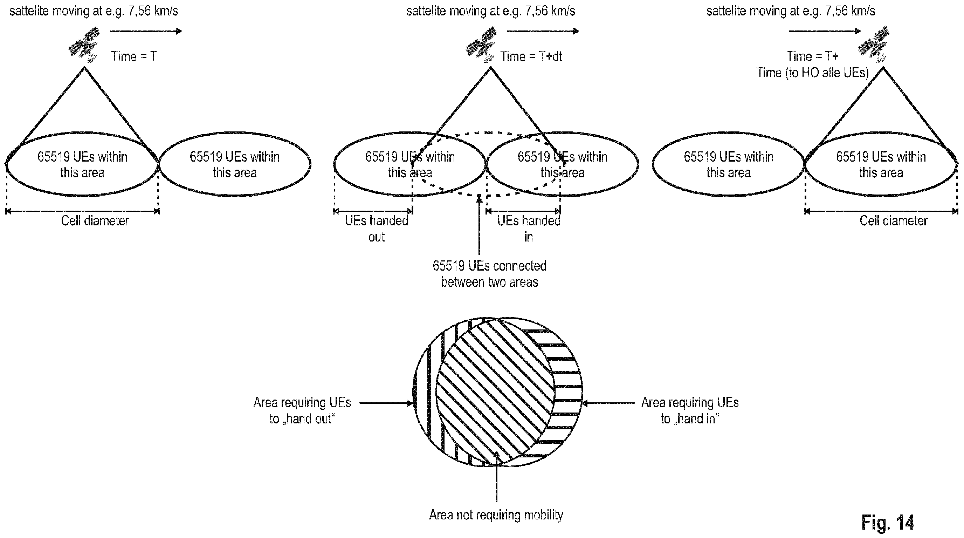

In particular, in the deployment of LEO satellites with Earth-moving cells, a huge number of UEs could hand-in and hand-out simultaneously due to the fast movement of the LEO cells relative to UEs on the ground. This is illustrated in **Fig. 14** which shows the change in area when a LEO satellite moves and the corresponding area that moves in and out of coverage. Correspondingly, Fig. 14 illustrates the area which requires hand-out mobility, i.e. the area in which the UEs drop out of coverage and thus require mobility in the form of a handover to another satellite (see e.g. vertically shaded area at the bottom of Fig. 14). Moreover, Fig. 14 also illustrates the area that is still covered by the moving LEO satellite and thus does not require mobility (see e.g. slopely shaded area at the bottom of Fig. 14). Finally, Fig. 14 illustrates the area that is newly covered by the moving LEO satellite and thus requires hand-in mobility, i.e. the area in which UEs come into coverage and thus require mobility in the form or handing to this satellite (see e.g. horizontally, shaded area at the bottom of Fig. 14).

Due to the fast movement of the satellite, the number of UEs requiring mobility can be quite high. Such a massive handover scenario may occur e.g. primarily in the above discussed scenario D2, and to a lesser extent also in scenario D1. For instance, the number of UEs requiring mobility can reach up to 19824 UEs/s, e.g. depending on the cell diameter. The following table provides an exemplary overview of the average handover rate (including hand-in and hand-out mobility).

| **Cell Diameter (km)** | **Approximate Cell Area (km2)** | **Average UE density (UE/km2)** | **Satellite speed (km/s)** | **Time to HO all UEs in cell (s)** | **Average "hand-out" rate (UE/s)** | **Average HO Rate (in+out) (UEs/s)** |
|---|---|---|---|---|---|---|
| 50 | 1964 | 33.36 | 7.56 | 6.61 | 9912 | 19824 |
| 100 | 7854 | 8.34 | | 13.23 | 4952 | 9904 |
| 250 | 49087 | 1.33 | | 33.07 | 1981 | 3962 |
| 500 | 196000 | 0.33 | | 66.14 | 991 | 1982 |
| 1000 | 785000 | 0.08 | | 132.28 | 495 | 990 |

A large amount of UEs handing-in and handing out simultaneously could lead to huge signaling overheads and make the user-data transmission less efficient. In the exemplary scenario of Fig. 14, this would include at the time t+dt:
sending out handover command messages (e.g. RRCReconfiguration message; see above and Fig. 9) to all the UEs that stay behind in the vertically-shaded area within time duration dt, and
receiving handover complete messages (e.g. RRCReconfigurationComplete message; see above and Fig. 9) from all the UEs that are in the horizontally-shaded area within time duration dt.

Such a massive handover scenario is described above in connection with an exemplary NTN scenario. However, massive handover scenarios may also occur for terrestrial communication, such as UEs that travel in high-speed trains. Consequently, the underlying problem is not limited to only NTN, even though the following is described primarily focused on NTN for sake of simplicity.

The inventors have thus identified the possibility of providing mechanism that improve the handover procedures.

Although discussed primarily in connection with an NTN scenario, the different implementations and variants of the improved procedures can be also applied for non-NTN, i.e. terrestrial communication.

### Embodiments

In the following, UEs, base stations, and procedures to meet these needs will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, a **mobile station** or **mobile node** or **user terminal** or **user equipment** (UE) is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

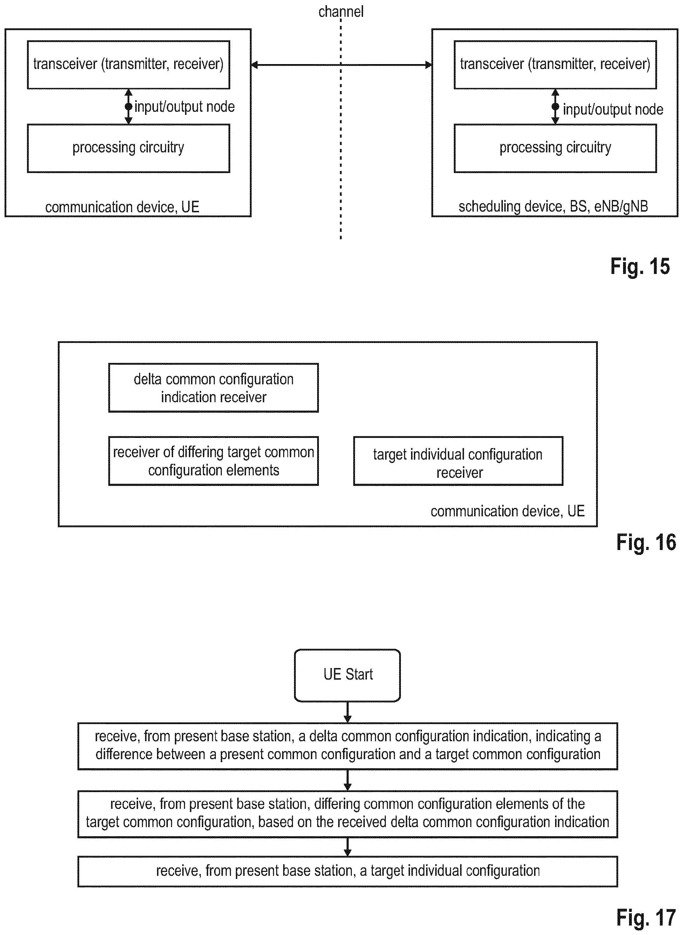

**Fig. 15** illustrates a general, simplified and exemplary block diagram of a user equipment (also termed communication device) and a scheduling device (here exemplarily assumed to be located in the base station, e.g. the eLTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

An improved configuration procedure will be described in the following. In said connection, an improved UE and improved base station are presented which participate in the improved configuration procedure. Corresponding methods for the UE behavior and the base station behavior are provided as well.

**Fig. 16** illustrates a simplified and exemplary UE structure according to one exemplary solution of the improved configuration procedure, and can be implemented based on the general UE structure explained in connection with Fig. 15. The various structural elements of the UE illustrated in said figure can be interconnected between one another e.g. with corresponding input/output nodes (not shown) e.g. in order to exchange control and user data and other signals. Although not shown for illustration purposes, the UE may include further structural elements.

As apparent from Fig. 16, the UE may include a delta common configuration indication receiver, a receiver for receiving differing target common configuration elements, and a target individual configuration receiver.

In the present case as will become apparent from the below disclosure, the receiver of the UE can thus be exemplarily configured to at least partly perform one or more of receiving a delta common configuration indication, of receiving differing common configuration elements of the target common configuration, and receiving a target individual configuration, etc.

One exemplary solution as will be disclosed in more detail further below is implemented by a UE that includes the following. A receiver of the UE receives, from a present base station, a delta common configuration indication, indicating a difference between a present common configuration and a target common configuration. The present common configuration is used by the UE for communication with a present base station that controls a present radio cell in which the UE is located. The target common configuration is usable by the UE for communication with a target base station. The receiver receives, from the present base station, differing common configuration elements of the target common configuration, based on the received delta common configuration indication. The differing common configuration elements are different between the present common configuration and the target common configuration. The receiver receives, from the present base station, a target individual configuration to be used by the UE for communication with the target base station.

A corresponding sequence diagram for an exemplary UE behavior in line with the above-discussed UE is illustrated in **Fig. 17****.** According to this improved configuration procedure, the UE performs the following steps. The UE receives, from a present base station, a delta common configuration indication, indicating a difference between a present common configuration and a target common configuration. The present common configuration is used by the UE for communication with a present base station that controls a present radio cell in which the UE is located. The target common configuration is usable by the UE for communication with a target base station. The UE further receives, from the present base station, differing common configuration elements of the target common configuration, based on the received delta common configuration indication. The differing common configuration elements are different between the present common configuration and the target common configuration. Moreover, the UE receives, from the present base station, a target individual configuration to be used by the UE for communication with the target base station.

According to this improved configuration procedure, the UE is provided in an efficient way with the necessary configuration information (e.g. called target configuration information) on how to attach and communicate with a target base station that could be the potential target of a handover in the near future.

In particular, the improved configuration procedure includes mechanisms allowing to transmit as few configurations to each individual UE as possible. This is particularly helpful in scenarios that involve the transmission of configuration information on a large scale, such as the massive handover scenario exemplarily explained for the NTN handovers (see e.g. above description relating to Fig. 14). To said end, two separate but interrelating mechanism synergetically combine according the improved configuration procedure to achieve a significant reduction of the transmission of configuration information.

According to a first mechanism involved in the improved configuration procedure, the configuration information that is typically used by the UE to communicate with a base station is categorized in two parts, differentiating between those elements of the configuration information that are common for many or all UEs communicating with the base station (such as a cell ID, or security algorithms, or information on time and frequency resources for performing a random access procedure) and those elements of the configuration information that are specific to a UE (such as a dedicated random access procedure preamble, or a UE ID).

This distinction between common configuration elements and UE-specific (or called individual) configuration elements for instance applies separately for each radio cell, including the presently used serving cell of the UE as well as a neighbouring cell that could potentially serve as the target for the handover of the UE. Correspondingly, any radio cell uses configuration elements that can be categorized into common and UE-individual parts.

According to one example, the common configuration information need not be transmitted individually to each UE, but could instead be broadcast to be received by all or a group of UEs in the radio cell. This already allows to save significant transmission resources at the base station.

On the other hand, the individual configuration, although possible, will typically not be broadcast. Rather, it will be sent in a UE-dedicated message to the respective UE.

The individual configuration and common configuration thus provide the UE with the necessary information on how to attach and communicate with a base station.

According to a second mechanism involved in the improved configuration procedure, the inventors have identified the possibility to reuse elements of the common configuration between the present radio cell and the potential target radio cell. Correspondingly, the common configuration of the present radio cell (e.g. called present common configuration) shares certain configuration elements with the common configuration of a potential target radio cell (e.g. called target common configuration). The differing target common configuration elements then are those configuration elements of the target common configuration that are different from the present common configuration. In effect, it is thus not necessary to provide the shared common configuration elements to the UE, but rather only the differing target common configuration elements so as to prepare the UE for a handover. The UE can thus compile (or can also be termed "assemble" or "put together") the complete common part of the target configuration information based on the present common configuration (e.g. the shared common configuration elements) and the differing target common configuration elements. By not being required to provide the complete target common configuration to the UE (but only the differing target common configuration elements), less information needs to be transmitted to the UE in order to allow the UE to attach to and communicate with the target base station.

For massive handover scenarios, where the network (e.g. source base station) has to provide a large number of UEs with such target-cell-related configuration information, the improved configuration information allows an even further and more important reduction in the amount of transmitted information from the network to the UEs, thereby significantly reducing stress on the radio resources and base station.

A corresponding delta target common configuration indication is provided to the UE to allow the UE to determine that there is a difference between the present common configuration and the target common configuration. The delta common configuration indication can then be used by the UE to receive or determine the differing common configuration elements of the target common configuration. For instance, the delta common configuration indication allows the UE to determine which configuration elements are the differing common configuration elements that it will receive (such as the cell ID, or information on the uplink/downlink-related time-frequency radio resources), thereby also allowing to correctly put together the complete target common configuration based on the present common configuration and those determined differing target common configuration elements.

According to a further example, the delta target common configuration indication could additionally provide the UE with information on how to obtain the differing target common configuration elements, e.g. by pointing to a system information block that carries the elements.

The second mechanism thus builds on the first mechanism by further differentiating the configuration elements of the common part of the configuration information for the purpose of preparing and improving a possible handover with another target base station. Significant signalling overhead can be saved by broadcasting only that part of the target common configuration that is different from the common configuration of the current serving cell.

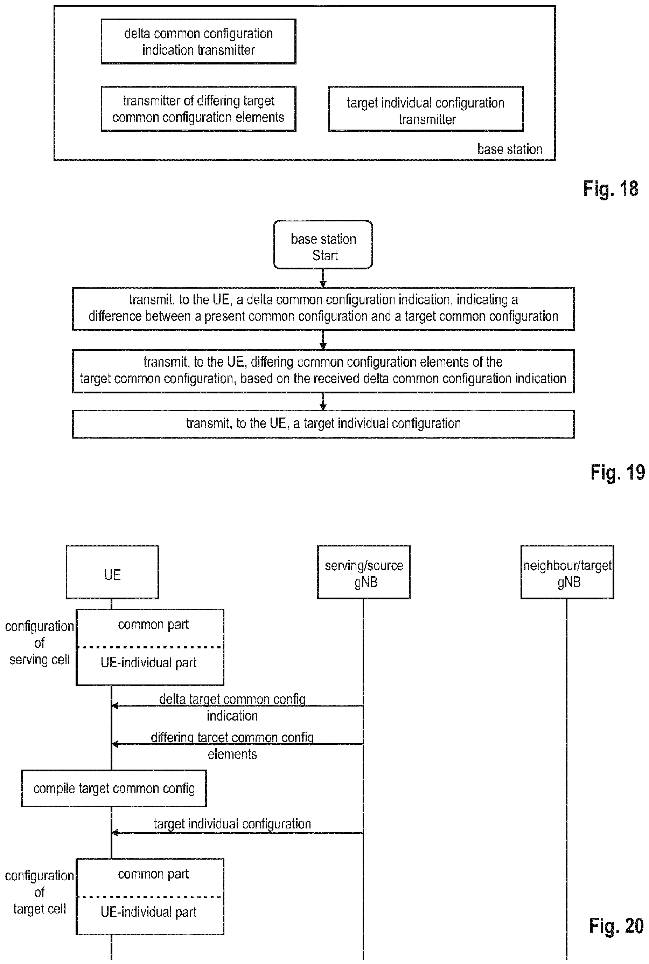

As already apparent from above, the improved configuration procedure also provides an improved radio base station. **Fig. 18** illustrates a simplified and exemplary base station structure according to one exemplary solution of the improved configuration procedure, and can be implemented based on the general base station structure explained in connection with Fig. 15. The various structural elements of the radio base station illustrated in said Fig. 18 can be interconnected between one another e.g. with corresponding input/output nodes (not shown) e.g. in order to exchange control and user data and other signals. Although not shown for illustration purposes, the base station may include further structural elements.

As apparent from Fig. 18, the base station may include a delta common configuration indication transmitter, a transmitter for transmitting differing target common configuration elements, and a target individual configuration transmitter.

In the present case as will become apparent from the below disclosure, the transmitter of the base station can thus be exemplarily configured to at least partly perform one or more of transmitting the delta common configuration indication transmitter, the differing target common configuration elements, and the target individual configuration etc.

One solution as will be disclosed in more detail further below is implemented by a radio base station that includes the following. In the present case, the radio base station acts as the present/source/serving base station to a UE. A transmitter of the base station transmits, to a user equipment, UE, a delta common configuration indication, indicating a difference between a present common configuration and a target common configuration. The present common configuration is used by the UE for communication with the base station that controls a radio cell in which the UE is located. The target common configuration is usable by the UE for communication with a target base station. The transmitter transmits, to the UE, differing common configuration elements of the target common configuration, based on the received delta common configuration indication. The differing common configuration elements are different between the present common configuration and the target common configuration. The transmitter transmits, to the UE, a target individual configuration to be used by the UE for communication with the target base station.

A corresponding sequence diagram for an exemplary base station behavior in line with the above-discussed base station is illustrated in **Fig. 19****.** According to this improved base station behavior for the configuration, the base station transmits, to a user equipment, UE, a delta common configuration indication, indicating a difference between a present common configuration and a target common configuration. The present common configuration is used by the UE for communication with the base station that controls a radio cell in which the UE is located. The target common configuration is usable by the UE for communication with a target base station. The base station transmits, to the UE, differing common configuration elements of the target common configuration, based on the received delta common configuration indication. The differing common configuration elements are different between the present common configuration and the target common configuration. The base station transmits, to the UE, a target individual configuration to be used by the UE for communication with the target base station.

Correspondingly, the improved base station facilitates that fewer configuration information is transmitted from the base station to the UE, as explained above in relation to the improved UE.

A simplified and exemplary communication exchange according to the improved configuration information is illustrated in **Fig. 20****.** As apparent therefrom, it is exemplarily assumed that the UE is already provided with suitable configuration information for the serving cell that can be categorized into a common part and an UE-individual part. For instance, the UE may have been provided with this serving-cell-related configuration information when initially attaching to the serving cell, e.g. using system information broadcasted in the serving cell and/or UE-dedicated control messages. In addition, or alternatively, the UE may have been provided with this serving-cell-related configuration information (or part thereof) from a previous source base station from which the UE handed over to the present base station, e.g. based on the improved configuration information explained herein.

As apparent from this figure, the serving base station, serving the UE, transmits the delta target common configuration indication to the UE and also the differing target common configuration elements. This allows the UE to compile the complete common part of the target configuration information in line with the delta indication, based on the common part of the serving cell configuration and the received differing target common configuration elements. Exemplarily, the target individual configuration is transmitted thereafter to the UE. The UE is thus provided with the suitable configuration information for the potential target cell, before it is fully attached to the target cell, including the common part and UE-individual part thereof.

Although in Fig. 20 a particular sequence is illustrated as to when the UE receives the delta target common configuration indication, the differing target common configuration elements and the target individual configuration, the improved configuration procedure is not limited thereto, and another suitable reception sequence can be adopted. For instance, the target individual configuration can be received before the differing target common config elements and before or after the reception of the delta target common configuration indication.

According to exemplary variants, the delta target common config indication can be broadcast by the serving base station, such that the indication is received by all or a group of UEs located in its radio cell. This allows for an efficient way of providing the indication to the UEs, thus saving transmission radio resources in the radio cell. For instance, the delta target common configuration indication can be broadcast in system information, such as one of the system information blocks (e.g. SIB1).

The delta target common configuration indication can be seen as being part of the common part of the target-cell-related configuration, since it should be common to all or a group of UEs. Alternatively, the delta target common configuration indication could also be seen as not belonging to the common part of the target-cell-related configuration, but rather being separate therefrom. Still alternatively, or additionally, the delta target common configuration indication could also be transmitted as part of the individual target configuration.

According to an exemplary variant, that can be combined with other variants and implementations of the improved configuration procedure, the differing configuration elements of the target common configuration for accessing the next target cell can be composed of one or more elements. For instance, only the target cell ID might be different from the serving cell ID, while all other configuration elements would be the same (such as the security algorithm, the RACH resources, other system information).

As another example, a defined set of configuration elements is different between the target-cell-related and serving-cell-related common configuration, e.g. including the target cell ID, the RACH resources, uplink/downlink-related time-frequency radio resources).

As still another example, most or all of the configuration elements could be different between the target-cell-related and serving-cell-related common configuration. In such a case, the differing target common configuration elements could represent the complete target common configuration.

The amount or level of difference is indicated by the delta common configuration indication.

According to an exemplary variant, that can be combined with other variants and implementations of the improved configuration procedure, the differing configuration elements of the target common configuration for accessing the next target cell can be sent via broadcasting by the serving base station so as to save further signaling overhead. For instance, the differing target common configuration elements could be broadcast in system information, such as one of the system information blocks. Since the amount of information to be broadcast is much larger for the differing target common configuration elements than the delta target common configuration indication, one exemplary implementation includes that a system information block which a larger periodicity (than SIB1 that can be used to carry the delta common configuration indication) is used for carrying the differing target common configuration elements, in order to reduce the rate of the broadcasted information over time.

Rather than using the system information mechanism, some or all of the differing target common configuration elements could be alternatively or additionally be broadcast in an RRC message. To said end, the RRC message could be addressed based on a new identity, such as a new group or broadcast RNTI.

Alternatively or additionally, instead of broadcasting, some or all of the differing target common configuration elements could be provided to the UE in a dedicated manner, i.e. by a UE-dedicated message that is addressed to one UE (e.g. using a C-RNTI of the UE). For example, a message of the RRC protocol could be used in said respect.

According to still another alternative or additional implementation, it is possible that some, most or all of the differing target common configuration elements are already available at the UE and need to only be determined by the UE, e.g. based on the ID of the target radio cell. For example, the target RACH occasion configuration could be determined by applying a time and/or a frequency offset to a predefined RACH occasion configuration, where the time and/or frequency offset is calculated based on the target cell ID.

The serving base station may also use one or more of the above discussed mechanisms to provide the differing target common configuration elements to the UE(s) in its radio cell. For instance, the delta target common configuration indication and/or the ID of the target cell can be provided to the UE by system information (e.g. in SIB1), whereas some or all of the remaining differing target common configuration elements can be provided to the UE using a different broadcast mechanism (e.g. different SIB, or broadcast RRC message) or a dedicated transmission of said elements or the UE can perform a suitable determination based on some preconfigured information.

The improved configuration procedure may also take into account the amount of information of the differing target common configuration elements that has to be carried, and thus use a suitable mechanism in said respect. For instance, in case there is a large amount of information to be provided to the UE, the differing target common configuration elements may be provided to the UE based e.g. on a broadcast RRC message or a dedicated RRC message rather than a system information broadcast which has only limited resources.

The suitable mechanism(s) could be determined by the serving base station, and the UE could be suitably configured to be able to receive the differing target common configuration elements. According to one exemplary implementation, a corresponding indication (e.g. called location indication) could be provided to the UE, e.g. together with the delta target common configuration indication (e.g. in SIB1). The UE, when receiving this location indication, can determine how the differing target common configuration elements are transmitted and can correctly receive them.

In the following, more information is provided on the target individual configuration according to the improved configuration procedure.

As will be explained in the following according to specific exemplary implementations, that can be combined with other variants and implementations of the improved configuration procedure, the content of the target individual configuration provided by the serving base station to the UE could be as follows.

According to one example, the individual target configuration can include the new UE ID that the UE will be assigned in the target radio cell, and information on the dedicated RACH preamble that the UE should use when executing the handover to that target radio cell. According to a further example, the individual target configuration may additionally include an identification of the target cell, so as to clarify to which target cell the individual target configuration belongs. This could also be useful for instance in case there are multiple target cells and correspondingly multiple common target configurations (so the UE can know which common target configuration is to be combined with the individual target configuration).

Moreover, the individual target configuration can include the delta target common configuration indication (e.g. instead of or in addition to carrying the delta target common configuration indication in the differing target common configuration or separate therefrom). Correspondingly, the UE may obtain the indication separately, possibly earlier than according to the other solutions (e.g. in SIB1). Thus, the UE could obtain the differing target common configuration elements earlier.

In addition to the above, the individual target configuration may also indicate a handover timer value that allows the UE to determine the time at which the UE is to handover to that target base station. The value of the indicated handover timer can be determined by the serving base station, e.g. based on characteristics of the UE (such as location in the cell, or speed of the UE) and characteristics of the serving base station and target base station (such as moving speed and moving direction of serving and target satellite).

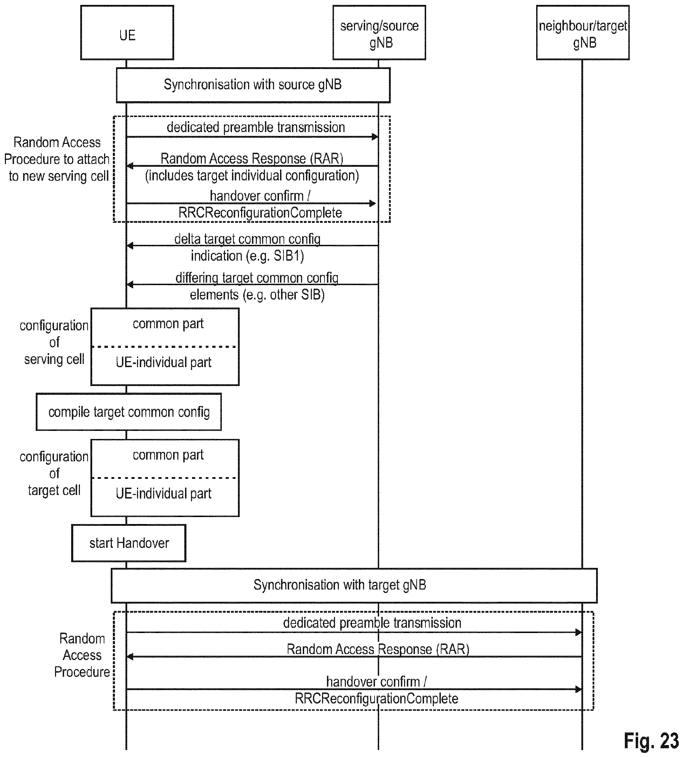

This handover timer could be used e.g. in connection with an improved handover presented below where the UE autonomously determines when to perform the handover without a corresponding handover decision occurring at the serving gNB (see e.g. Fig. 23, 24, 25).

According to a more specific example, information on the UE location can be passed from one cell to the next cell during handover (e.g. assuming that the UE's moving speed is negligible compared to satellite's moving speed). Thus, the cells know the location of the UE, without the need of the UE to inform the gNB; e.g. a GNSS-equipped UE can report its location to its serving gNB in the measurement report.

As will be explained in the following according to specific exemplary implementations, that can be combined with other variants and implementations of the improved configuration procedure, there are different ways on how and when the target individual configuration can be transmitted to the UE. Generally, the target individual configuration can be transmitted in a dedicated message to the UE to which it pertains, e.g. in a control message of the RRC protocol.

As to the point in time, the individual target configuration can be provided to the UE in time for the handover to the target cell to which the configuration refers, e.g. before or during the handover procedure to this target cell. In prior art solutions the required configuration information is provided to the UE in or together with the handover command message (see e.g. RRCReconfiguration message of Fig. 9). Correspondingly, according to one possible exemplary solution, the individual target configuration is provided in a handover command message that is transmitted by the serving base station after the serving base station decides (e.g. based on a measurement report and the channel quality) that the UE needs to now handover to the next target cell.

However, in some scenarios such as the massive handover scenarios where many handovers take place at the same time, this entails the disadvantage that many handover command messages need to be transmitted in a brief time period (right before handover is required and executed) and to many UEs, which increases the need for transmission resources at that time.

Correspondingly, according to some exemplary implementations of the improved configuration procedure, the individual target configuration are provided at an earlier point in time, so as to avoid these disadvantages and thus reduce the accumulation of transmissions right at the time of handover execution, e.g. for massive HO scenarios.

For instance, at the earliest time, the serving base station can transmit the individual target configuration to the UE when the UE attaches to the serving base station, e.g. during the random access procedure performed between the UE and the serving base station. For instance, the individual target configuration can be transmitted within the random access response message. Alternatively, the individual target configuration can be transmitted by the serving base station together with the random access response message, e.g. within the same PDU that carries the RAR message, e.g. where the individual target configuration is carried in an RRC message. According to another exemplary option, the serving base station can transmit the individual target configuration during normal communication with the UE but before the handover takes place; the individual target configuration may be transmitted by the serving base station in a message (e.g. RRC message) e.g. together with user data.

According to some exemplary implementations of the improved configuration procedure as described above, the transmission of the individual target configuration can be seen as a handover command message. Thus, a further handover command message is not necessarily transmitted by the serving base station. For instance, the RRC messages carrying the individual target configuration as discussed above can be defined as the new handover command messages that trigger the UE to handover to a new target cell at a later timing. Similarly, assuming the above solution where the RAR itself carries the individual target configuration, this RAR acts as the handover command message and no further handover command message is necessary. As will be described in more detail below, the UE can autonomously determine when to execute the actual handover.

In the following, an overview is presented on the possible content of the target common configuration and thus the possible differing target common configuration elements.
- the delta target common configuration indication,
- a location indication, indicating how and where to retrieve the differing target common configuration elements,
- an identification of the target cell
- information that can be used to access the next cell, such as one or more of:
   ∘ Target cell security algorithm identifiers
   ∘ Configuration for common RACH resources
   ∘ Association between RACH resources and SSB(s)
   ∘ Polarization and/or frequency configurations (e.g. carrier frequency, BWP)
   ∘ SSB-beam related information (e.g. location and SSB index of each beam)
   ∘ System information of the next cell
- Geographic characteristics of the serving cell; e.g. the center location of the projected cell on Earth (center location of multiple beams), the size of the projected cell on Earth, and the moving direction and moving speed of the satellite
- Channel quality related handover conditions; e.g. RSRP/RSRQ/SINR conditions to trigger HO to the next cell.

In the above explanation for the improved configuration procedure, it has been simply assumed that the serving base station has already the necessary information to generate and transmit the delta target common configuration indication, the differing target common configuration elements and the target individual configuration. These transmissions however relate to another radio cell, i.e. the potential target cell, and several possibilities are presented in the following on how the serving gNB is provided with such information, according to exemplary variants of the improved configuration procedure that can be combined with other variants and implementations.

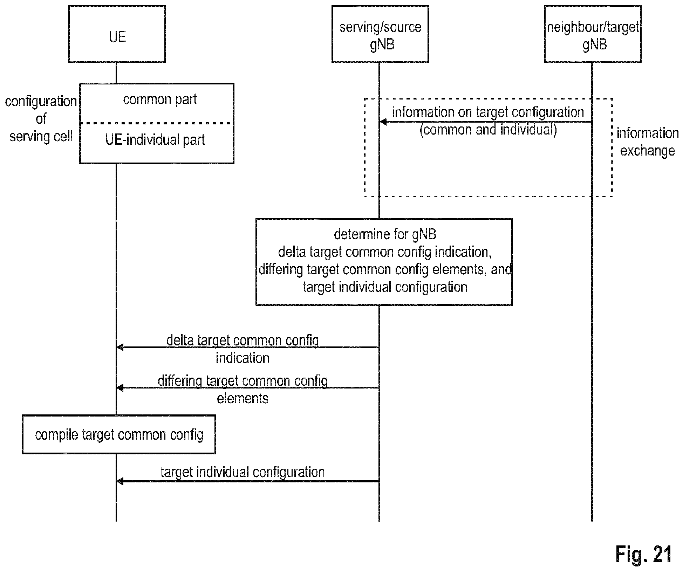

**Fig. 21** is a signaling exchange diagram that is based on the exemplary solution described for Fig. 20 above, however, additionally includes processes to be performed between the serving gNB and the target gNB. In the particular exemplary variant of Fig. 21, an information exchange is provided from the target gNB to the serving gNB so as to convey information on the target configuration to the serving gNB. Based on the exchanged information, the serving gNB is then able to first determine or generate the different messages to the UE (here the delta target common configuration indication, the differing target common configuration elements and the target individual configuration).

More specifically, the configuration information provided by the target gNB to the serving gNB may e.g. comprise information on the common part of the target configuration as well as on the individual part of the target configuration. The individual and common parts of the target configuration can be transmitted by the target gNB together to the serving gNB, or can be transmitted separately.

According to specific exemplary variants, the information exchange may occur periodically, e.g. every 10ms. Alternatively or additionally, the information exchange may also occur based on a corresponding request by the serving gNB.

According to other specific exemplary variants, the provision of the common part of the target configuration is separated from the provision of the individual part of the target configuration, considering that the target common configuration will change much less than the target individual configuration. For instance, the target common configuration could be exchanged in a periodic manner but less frequently than the target individual configuration.

According to another example, while the target common configuration could be exchanged periodically, the target individual configuration may be provided to the serving gNB upon a corresponding request by the serving gNB. For instance, the handover request message of Fig. 9 (that is part of a handover procedure for a specific UE) could be used as such a request, and the subsequent handover request acknowledgement message may then carry the target individual configuration. After thus receiving the target individual configuration, the serving gNB can forward same in the corresponding handover command message to the UE.

One exemplary implementation on how the target individual configuration is informed to the serving gNB and then determined by the serving gNB will be explained in the following. It is exemplarily assumed that the target individual configuration includes the UE ID to be used by the UE in the target cell and the dedicated RACH preamble to be used by the UE for the RACH procedure when attaching to the target cell. According to this exemplary implementation of the improved configuration procedure, the target gNB provides a list of vacant UE IDs (e.g. C-RNTIs) and a list of vacant dedicated RACH preambles to the serving gNB in a periodic manner. The serving gNB can thus assign to a UE a suitable UE ID and dedicated RACH preamble for the target cell. The individual target configuration to be transmitted to the UE would then include the assigned UE ID and dedicated RACH preamble.

In an optional variant, the serving gNB could then keep the target gNB informed about the assigned UE IDs and dedicated RACH preambles. Based on this information, the target gNB can thus update the two lists of vacant UE IDs and dedicated RACH preambles, and subsequently continue providing updated lists to the serving gNB in a periodic manner.

This implementation of the information exchange can run in parallel with the transmission of the three messages to the UE. It is advantageous because it shifts the process of assigning, to the UE, the target-cell-related UE ID and dedicated RACH preamble to the source gNB. Thus, the handover preparation can be performed by the serving gNB without the need to specifically contact the target cell for each UE that enters the serving cell and needs to eventually handover.

According to another exemplary implementation, the UE ID and dedicated RACH preamble is assigned per UE, such that they are valid permanently for the UE. In said case, that part of the target individual information is known to the serving gNB without having to receive any corresponding information from the target gNB. For instance, the UE ID and dedicated RACH preamble could be assigned to the UE while setting up and establishing for the first time the connection to a gNB, e.g. through the RRCSetup or RRCReestablishment procedures. Such fixedly assigned UE ID and dedicated RACH preamble could e.g. remain valid while the UE remains in the RRC Connected state. Thus, the fixedly assigned UE ID and dedicated RACH preamble remains the same for the serving cell and the target cell, it need not be provided to the UE according to the improved configuration procedure.

According to this exemplary implementation, this requires the coordination among different gNBs that a certain RACH preamble and UE ID are fixedly associated to a certain UE.

Moreover, although the above is described assuming that there is only one potential target cell to which the UE can handover, the improved configuration procedure is also applicable in case there are more than one potential target cells. In such a case, the above-and-below described variants and implementations are to be performed for multiple target cells.

For instance, the UE is provided, per potential target cell, with a delta target common configuration indication, differing target common configuration elements (e.g. including a cell identity), and a target individual configuration. Put differently, the delta target common configuration indication, the differing target common configuration elements, and the target individual configuration are specific to and different for each target cell. Then, the UE defines, per each potential target cell, the corresponding target configuration information by putting together all the information, based on the present common configuration information and respectively the delta target common configuration indication, the differing target common configuration elements and the target individual configuration, as explained above in connection with other variants of the improved configuration procedure. Further, when performing the handover to one of the potential target cells, the UE already has all the necessary configuration information to attach to and communicate with that target cell.

According to a different solution, the individual target configuration can be provided when it becomes clear to which gNB the UE will handover, e.g. in the handover command message. In this way, the individual target configuration need not be provided to the UE per potential target cell, but only for the actual target cell.

Moreover, in case there are more than one target cells, the individual target configuration also contains a cell identity to which the individual target configuration belongs to. With the cell identity presented in the individual target configuration, the UE knows how to obtain the full configuration of the target common by combining the received individual target configuration with the common target configuration having the same cell identity.

According to the above-described variants and implementations of the improved configuration procedure, the UE is provided with some information on the target configuration. As already hinted at before, this target configuration information, including the common and individual part, can be then be used when handing over from the current serving cell to the target cell. In the following, specific exemplary implementations of the handover will be described, that can be combined with other described variants and implementations of the improved configuration procedure.

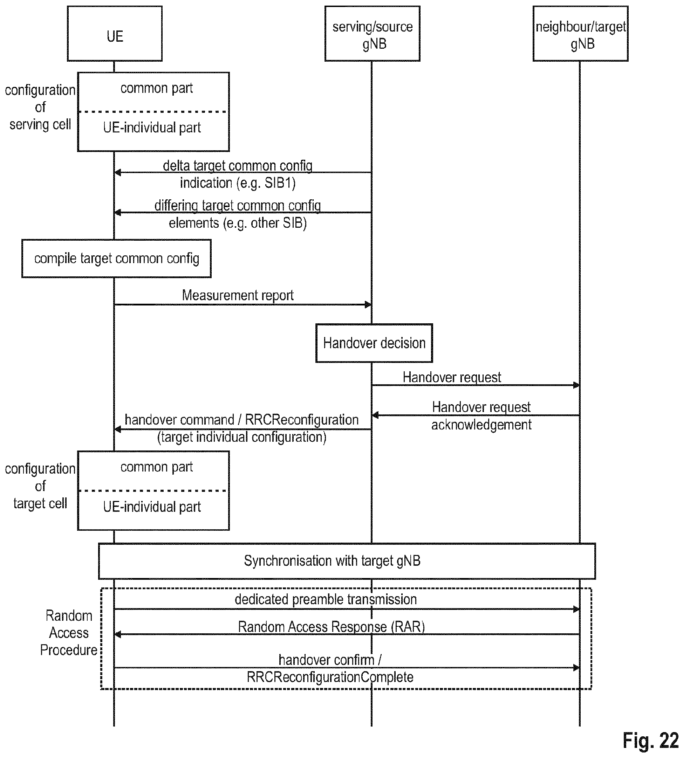

A first exemplary implementation for an improved combined configuration and handover procedure is illustrated in **Fig. 22****.** As apparent, Fig. 22 is based on the improved configuration procedure explained e.g. in connection with Fig. 20. It correspondingly illustrates the transmission of the delta target common configuration indication (e.g. in system information, e.g. SIB1), the differing target common configuration elements (e.g. in system information, some other SIB than SIB1), and the target individual configuration from the serving gNB to the UE.

For sake of simplicity in the illustration and explanation, Fig. 22 does not illustrate the exchange of information between the serving gNB and target gNB that may occur in order to allow the serving gNB to determine and transmit, to the UE, the delta target common configuration indication, the differing target common configuration elements, and the target individual configuration. This aspect of the improved configuration procedure was explained in detail above in connection with Fig. 21 and can be assumed to occur without however being illustrated in Fig. 22. This also applies to the solutions explained below in connection Fig. 23, 24, and 25.

It is exemplarily assumed that the handover procedure is quite similar to the legacy handover as explained in Fig. 9, thus being based on a handover decision taken at the serving gNB on the basis of measurement reports received from the UE. The improved handover procedure then involves the handover preparation between the serving gNB and the neighbour/target gNB, including the transmission of the handover request message from the serving gNB to the target gNB and then in turn the transmission of the handover request acknowledgement message from the target gNB to the serving gNB. In one exemplary implementation the handover request acknowledgement could additionally include the target individual configuration as explained above.

According to the improved combined configuration and handover procedure, the handover command message transmitted from the serving gNB to the UE could carry the target individual configuration. Therefore, different from the legacy handover procedure, the handover command message (e.g. RRCReconfiguration message) does not carry a large amount of configuration elements (e.g. including common and individual target configuration) but only the UE-specific configuration for the target cell. The common part of the target configuration was already assembled before by the UE (see "compile target common config" in Fig. 22). Therefore, the amount of information transmitted at the time of the actual handover can be significantly reduced.

According to some implementations described above, the transmission of the individual target configuration can be performed earlier than the point in time when the actual handover is executed. An early transmission of the individual target configuration has the benefit that it facilitates further reducing the amount of data to be transmitted at the time of the actual handover.

**Fig. 23** illustrates a further exemplary implementation for an improved combined configuration and handover procedure, according to which the target individual configuration is provided to the UE already at the time of attaching for the first time to the serving gNB. In particular, when attaching to the serving cell, the UE performs, after synchronizing, a RACH procedure, wherein the RAR of the RACH procedure can be used by the serving gNB to carry the target individual configuration. An exemplary payload of the new RAR format could contain the following: 1 reserved bit, 12 bits of Timing Advanced Command (TAC), optional 27 bits of uplink grant, optional 16 bits of target C-RNTI, optional 6 bits of preamble index (used to determine the dedicated preamble), and optional 10 bits of a new timer indicating when UE has to perform the handover to the target cell.

Such an early transmission of the individual target configuration can also be used in combination with a significantly different handover procedure. Such an improved handover procedure need no longer be based on the serving gNB deciding on whether to handover the UE or not, based on the measurement reports transmitted by the UE.

For instance, when exemplarily assuming a Non-Terrestrial scenario, in which the serving gNB and target gNB are satellites, the handover of UEs is very predictable because it largely depends on the movement speed and movement direction of the serving satellite, rather than the movement and channel quality experienced by the UE. The UE correspondingly would not need to transmit measurement reports to the serving gNB for assisting in the handover decision. Thus, the serving gNB and/or the UE can predict at which time the UE is to handover to the target cell. Correspondingly, a corresponding handover timer indication can be provided in the target individual configuration, which thus is used as the handover command message. The timer value can be calculated by the serving gNB, based on the UE location information and the satellite geographical information (i.e., satellite ephemeris information). The UE, upon expiry of the indicated handover timer can start the handover to the target cell. At the time the actual handover starts, all the required target-cell-related configuration information (e.g. common and individual part) are already available at the UE.

Such an improved solution facilitates that the handover-related transmission of information from the serving gNB to the UE at the time of the actual handover is completely avoided.

Instead of using a handover timer, provided in the target individual configuration, the UE can determine autonomously the suitable handover time, when being provided with the necessary information on the serving cell. For instance, when assuming exemplarily an NTN scenario, the common part of the target cell could include geographical characteristics of the serving satellite, such as the centre location and size of the serving cell as projected on Earth (e.g. center location of multiple beams), the moving direction and moving speed of the serving satellite. With this information, a UE (e.g. GNSS-equipped UE to correctly determine its location on Earth), can determine when it should perform the handover to the next cell.

According to still another solution on how the UE can autonomously decide when to perform the handover to the target cell, the UE can determine when to handover to the target cell based on channel-related conditions (such as RSRP/RSRQ/SINR) (in a similar manner as done by the serving gNB in legacy handover procedures). These channel-related conditions can be part of the common configuration of the serving cell. This solution is particularly useful when the UE is not aware about its own location (e.g. the UE is a non-GNSS-equipped UE).

Correspondingly, the UE can autonomously decide on when to execute the handover (rather than the serving gNB as in the legacy handover or in a solution of Fig. 22), such that there is no need for the serving gNB to provide a handover command message to the UE, which facilitates significantly reducing the signaling overhead at the time of performing the handover (exacerbated for massive HO scenarios).

According to a further exemplary implementation of the improved combined configuration and handover procedure, the UE need not send a handover confirm message (e.g. RRCReconfigurationComplete message) to the target gNB when completing the handover to the target gNB, particularly during the RACH procedure. Accordingly, in such a case, the UL grant field that is part of the previous RAR message of the RACH procedure could be an optional field, rather than mandatory. For instance, the target gNB may not include an UL grant, because the UE does no need to transmit the handover complete message nor any other uplink data. On the other hand, if the target gNB is aware that the UE has uplink data to be transmitted (e.g. based on information provided by the serving gNB, e.g. a buffer status report provided by the UE to the serving gNB), the target gNB can include a suitable UL grant in the RAR message.

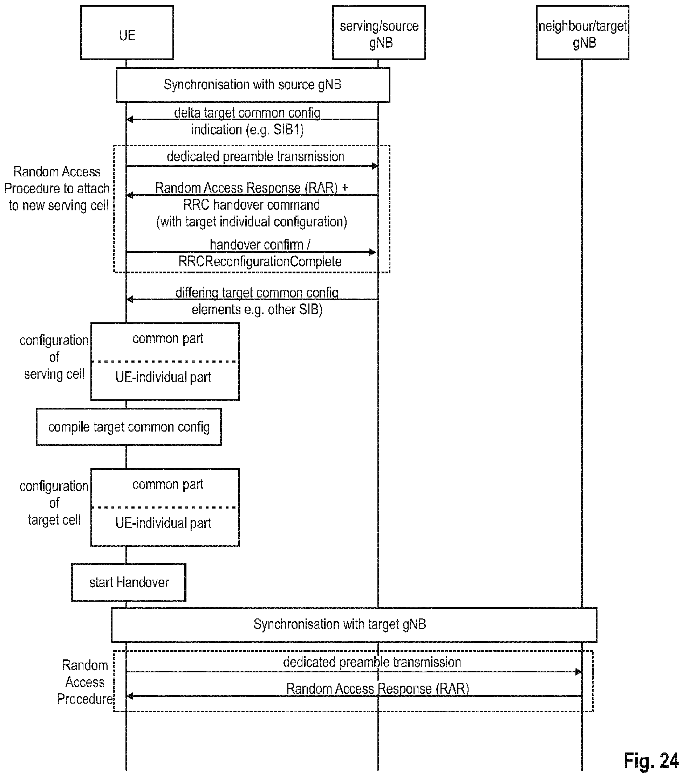

The UE according to the exemplary solution of Fig. 23 transmits such a handover complete message. On the other hand, Fig. 24 explained in more detail below illustrates how the UE may not need to transmit a handover complete message as part of the RACH procedure when attaching to the new target cell.

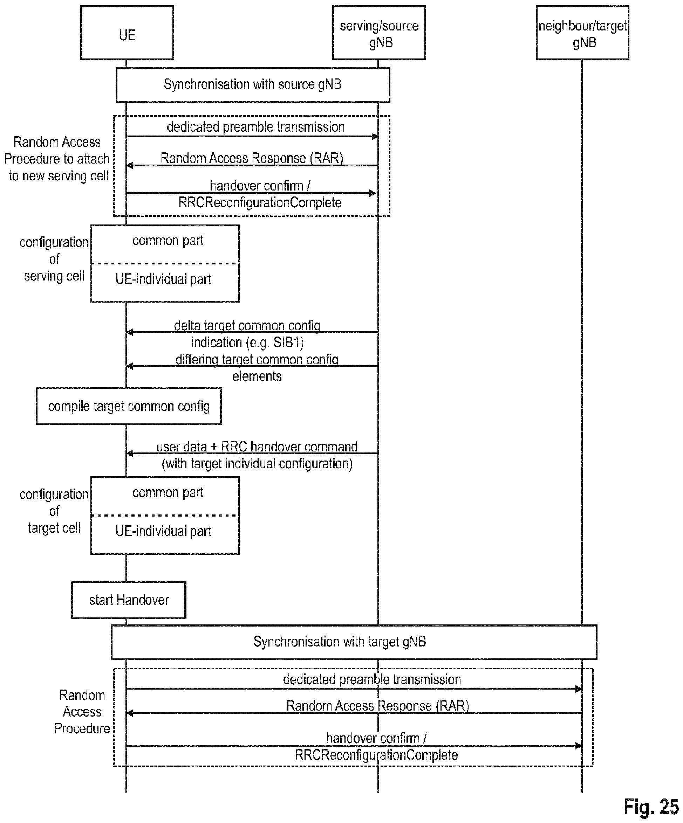

The sequence of transmissions in Fig. 23 (and also the one of Fig. 24 and 25 below) is an example and does not represent the only possibility. For instance, although typically the UE might also have received system information after having fully attached to the serving cell (i.e. after the RACH procedure is concluded), this is not necessary. Rather, the reception of the delta target common configuration indication and optionally also the differing target common configuration elements can occur before the RACH procedure (see e.g. Fig. 24).

**Fig. 24** is quite similar to the solution presented in connection with Fig. 23, according to which the individual target configuration is provided by the serving gNB to the UE at the time the UE attaches for the first time with the serving gNB. However, rather than transmitting the target individual configuration in the RAR itself, the exemplary variant of the improved configuration and handover procedure requires that the target individual configuration is provided to the UE together with the RAR rather than as part of the RAR. For instance, the serving gNB can transmit the target individual configuration to the UE in a message within the same MAC PDU as the RAR, e.g. in an RRC message such as the RRCReconfiguration message (illustrated as the RRC handover command message in Fig. 24).

A further difference already briefly mentioned above is that in the exemplary solution of Fig. 24 the UE is exemplarily assumed to receive the delta target common configuration indication (e.g. in SIB1) before performing the RACH procedure with the serving cell. Still another difference already briefly mentioned above is that in the exemplary solution of Fig. 24 the UE does not transmit a handover confirm message to the target gNB when completing the handover (e.g. completing the RACH to the target cell).

In order to avoid repetition, reference is made here to the description of the variant of Fig. 23 with regard to the remaining processes performed by the UE, serving gNB and target gNB, according to the improved configuration and handover procedure.

**Fig. 25** illustrates yet another exemplary variant of the improved configuration and handover procedure according to which the target individual configuration is not transmitted by the serving gNB to the UE when the UE attaches to the serving gNB (as in Fig. 23 and 24), but rather at a later point in time although well before the handover to the target cell is executed. In particular, it is assumed that the UE attaches to the serving gNB in the usual manner by synchronizing to and performing a RACH procedure with the target cell. On the other hand, at a suitable point of time, e.g. when transmitting user data to the UE, the serving gNB may transmit a message (e.g. an RRC message, such as the RRCReconfiguration message; called RRC handover command in Fig. 25), carrying the target individual configuration, to the UE. Correspondingly, the UE is still provided at an early time with the target individual configuration, such that no transmission of this information is needed at the time of the actual handover (see Fig. 22).

In order to avoid repetition, reference is made here to the description of the variant of Fig. 23 with regard to the remaining processes performed by the UE, serving gNB and target gNB, according to the improved configuration and handover procedure.

One specific exemplary implementation, that can be combined with other variants and implementations of the improved configuration procedure, relates in more detail as to how the delta target common configuration indication can be implemented. As exemplarily assumed above, the delta indication allows the UE e.g. to determine the differences between the target common configuration and the serving common configuration. According to one exemplary implementation, the delta target common configuration indication indicates one out of a plurality of different levels. Each level of the delta indication is associated with a set of particular differing configuration elements, such that the UE can determine from the delta indication which will be the differing target common configuration elements that it will have to receive and then use to compile the complete target common configuration.

For instance, a delta-indication = 0 could be defined such that the only differing target common configuration element is the target cell ID. Conversely, all other common configuration elements are the same between the target and serving cell. The differing target common configuration element would be the target cell ID, which can be obtained e.g. in system information such as SIB1.

According to one exemplary specific 5G NR conformant implementation of the above, a new information element "CommonMobilityConfig" could be added to the SIB1, as follows:

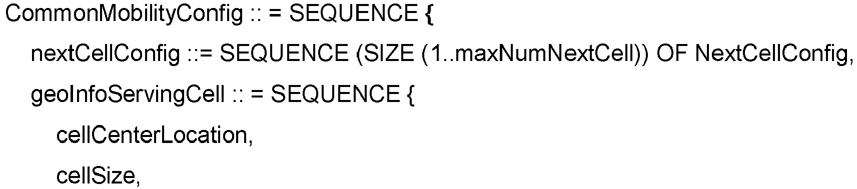

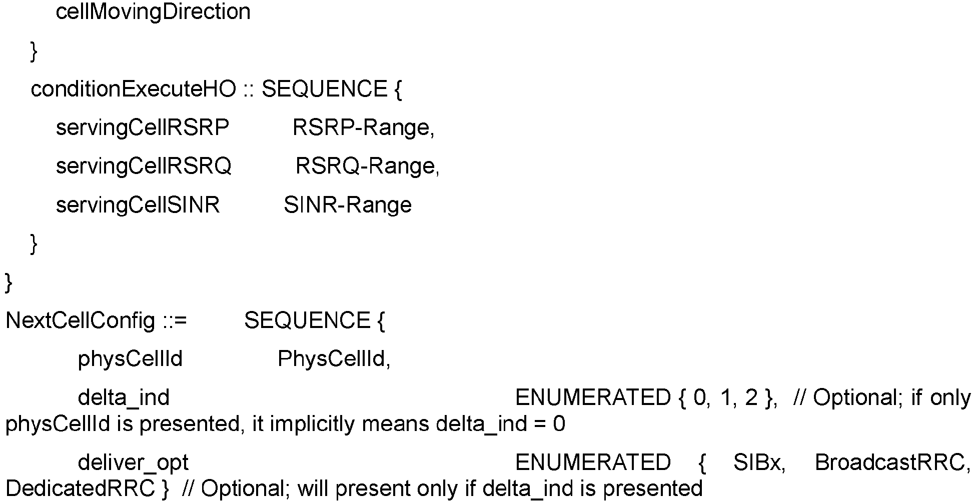

The above CommonMobilityConfig IE includes the target cell ID (physCeIIID), which the UE can obtain. As further optional information, according to exemplary variants already explained above, the new CommonMobilityConfig IE in SIB1 could also include the delta target common configuration indication (see delta_ind), and further the deliver_opt parameter that indicates how the remaining differing target common configuration elements can be obtained by the UE (e.g. through system information in a particular SIBx, by an RRC message that is broadcast or transmitted to the UE in a dedicated manner). The IE NextCellConfig can be provided per possible target cell.

Moreover, according to further optional implementations, the new CommonMobilityConfig IE could include information relating to the present serving cell, such as the geographical characteristics of the serving cell (e.g. satellite) (here including e.g. the cell center location, the cell size, and the cell moving direction). Still according to another optional implementation, the new CommonMobilityConfig IE may include information on the necessary channel quality related conditions on when to perform a handover. As explained above for the respective variant, this information can be used by the UE to autonomously determine when to perform a handover.

Further, a delta-indication = 1 could be defined such that a particular set of common configuration elements (e.g. also including the target cell ID) is different between the target and serving cell. Put differently, all configuration elements except for this common configuration element set are the same. This common configuration element set could be defined such that it comprises the common configuration elements that are likely to be different from one radio cell to another (or from one satellite to another satellite). For instance, the common configuration element set could comprise e.g. the time/frequency resource configuration that can coordinate interference between cells, such as the FrequencylnfoDL, FrequencylnfoUL, and TDD-UL-DL-ConfigCommon IE defined in 3GPP TS 38.331 (v15.9.0). Yet for another example, the common configuration element set could instead or additionally comprise e.g. the number of Synchronization Signal Blocks (SSBs) and the time domain positions of the transmitted SSBs, such as the ssb-PositionslnBurst IE defined in 3GPP TS 38.331 (v15.9.0).

A specific exemplary 5G NR conformant implementation on how the differing set of common configuration elements could be is provided in the following, according to a new DeltaCommonMobilityConfig information element.

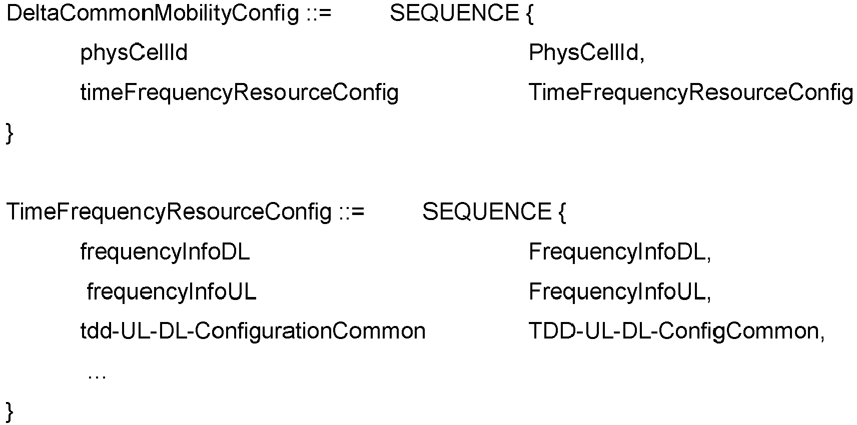

This new information element comprises the target cell ID (PhysCellID), and the time/frequency resource configuration as mentioned above. The new DeltaCommonMobilityConfig information element can be transmitted by the serving gNB in a suitable system information (e.g. SIBx), an RRC message that is broadcast or transmitted in a dedicated manner to the UE.

Further, a delta-indication = 2 could be defined according to which the majority or all of the common configuration elements are different between the target cell and the serving cell. In such a case, a different set of target common configuration elements could be defined or the UE determines that the full common configuration may need to be transmitted to the UE.

A specific exemplary 5G NR conformant implementation for a new information element that may carry the full common configuration is presented in the following.

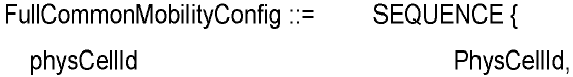

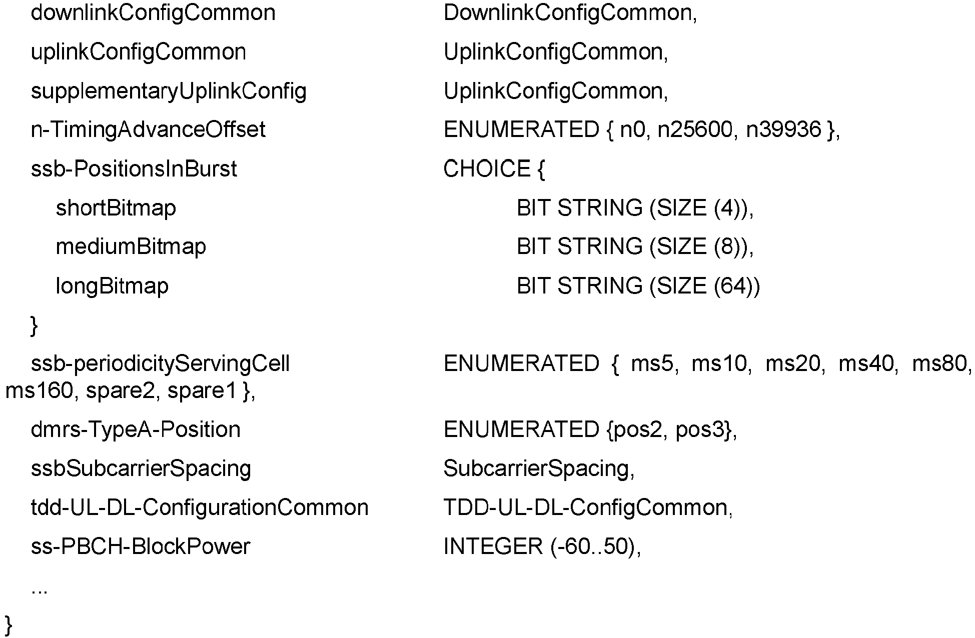

The information elements mentioned above are defined in more detail in the respective 3GPP standard 38.331, e.g. the DownlinkConfigCommon and UplinkConfigCommon IEs as follows. Other information elements are not copied for sake of brevity, but can be readily obtained from the 3GPP standard 28.331 v15.9.0.

### DownlinkConfigCommon

The IE *DownlinkConfigCommon* provides common downlink parameters of a cell.

### DownlinkConfigCommon information element

```
-- ASN1START
-- TAG-DOWNLINKCONFIGCOMMON-START
 DownlinkConfigCommon ::= SEQUENCE {
    frequencyInfoDL     FrequencyInfoDL OPTIONAL,-- Cond
    InterFreqHOAndServCellAdd
    initialDownlinkBWP    BWP-DownlinkCommon    OPTIONAL,    -- Cond ServCellAdd
    ...
}
    -- TAG-DOWNLINKCONFIGCOMMON-STOP
    -- ASN1STOP
```

| ***DownlinkConfigCommon* field descriptions** |
|---|
| ***frequencyInfoDL*** |
| Basic parameters of a downlink carrier and transmission thereon. |

| ***initialDownlinkBWP*** |
|---|
| The initial downlink BWP configuration for a serving cell. The network configures the *locationAndBandwidth* so that the initial downlink BWP contains the entire CORESET#0 of this serving cell in the frequency domain. |

| **Conditional Presence** | **Explanation** |
|---|---|
| *InterFreqHOAndServCellAdd* | This field is mandatory present for inter-frequency handover, and upon serving cell (PSCell/SCell) addition. Otherwise, the field is optionally present, Need M. |
| *ServCellAdd* | This field is mandatory present upon serving cell addition (for PSCell and SCell) and upon handover from E-UTRA to NR. It is optionally present, Need M otherwise. |

### UplinkConfigCommon

The IE *UplinkConfigCommon* provides common uplink parameters of a cell.

### UplinkConfigCommon information element

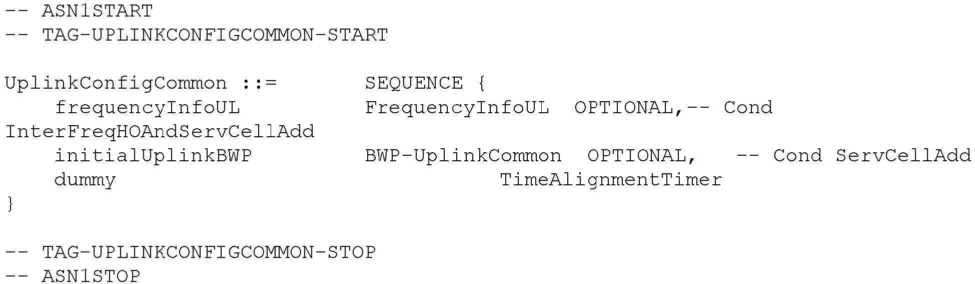

| ***UplinkConfigCommon* field descriptions** |
|---|
| ***frequencyInfoUL*** |
| Absolute uplink frequency configuration and subcarrier specific virtual carriers. |

| ***initialUplinkBWP*** |
|---|
| The initial uplink BWP configuration for a SpCell (PCell of MCG or SCG) and SCell (see TS 38.213 [13], clause 12). |

| **Conditional Presence** | **Explanation** |
|---|---|
| *InterFreqHOAndServCellAdd* | This field is mandatory present for inter-frequency handover and upon serving cell (PSCell/SCell) addition. Otherwise, the field is optionally present, Need M. |
| *ServCellAdd* | This field is mandatory present upon serving cell addition (for PSCell and SCell) and upon handover from E-UTRA to NR. It is optionally present, Need M otherwise. |

The delta indication is not restricted to the above implementation of using 3 different levels of difference. There may be more or less levels for the delta indication.

According to a further exemplary improvement of the presented configuration and handover procedure, handover failures are taken into account as follows.

A UE can keep the received and compiled common mobility configurations for the one or more target cells (including the delta indication) for a while in case that these configurations can be used later while dealing with the HO failure cases.

For instance, in case a HO failure occurs, the UE needs to declare the HO failure and release/reset all the RRC configurations. After that, the UE may need to perform cell selection/reselection and select a suitable cell for performing RRC reestablishment. As an improved implementation, the UE can choose to not release all RRC configurations (at least to keep the complied common mobility configurations for the one or more target cells). Then, if the selected cell happens to be one of the target cells for which the common mobility configuration were kept, UE can directly access the cell using the kept common mobility configuration, without reading the system information from the selected cell. This could shorten time required for the UE to reestablish its RRC connection and hence shorten the duration when the UE is not connected to the network.

Numerous variants and implementations of the improved configuration procedure and of the improved combined configuration and handover have been described. Some of these have been described separately from one another in order to be facilitate the understanding of the underlying mechanisms and benefits of the respective variant or implementation. However, it is equally possible to combine two or more of the variants and implementations of the improved procedures together to form new variants and implementations of the improved procedures. Without being exhaustive, a few of these implementations that can be combined are listed in the following. For instance, the solutions (and variants thereof) that revolve around the delta target common configuration indication can be combined with the solutions (and variants thereof) that revolve around the content and transmission options of the differing target common configuration elements and/or of the target individual configuration. Likewise, different improved handover procedures are presented which can be combined with the variants and solutions of the improved configuration procedure.

### Further Aspects

According to a first aspect, a user equipment, is provided that includes the following. A receiver of the UE receives, from a present base station, a delta common configuration indication, indicating a difference between a present common configuration and a target common configuration. The present common configuration is used by the UE for communication with a present base station that controls a present radio cell in which the UE is located. The target common configuration is usable by the UE for communication with a target base station. The receiver receives, from the present base station, differing common configuration elements of the target common configuration, based on the received delta common configuration indication. The differing common configuration elements are different between the present common configuration and the target common configuration. The receiver receives, from the present base station, a target individual configuration to be used by the UE for communication with the target base station.

According to a second aspect provided in addition to the first aspect, a processor of the UE uses a present individual configuration together with the present common configuration, for communication with the present base station. The present common configuration and the present individual configuration are received from the present base station, at least in part via system information broadcast and in part via UE-dedicated control messages. In addition or alternatively, the present common configuration and the present individual configuration are received from a previous source base station from which the UE handed over to the present base station.

According to a third aspect provided in addition to the first or second aspect, the present common configuration includes configuration elements that are common among a plurality of UEs that are communicating with the present base station. The present individual configuration includes configuration elements that are specific to the UE communicating with the present base station.

According to a fourth aspect provided in addition to one of the first to third aspects, a processor of the UE determines, based on the delta common configuration indication, the differing common configuration elements that are different between the present common configuration and the target common configuration. The processor combines the present common configuration with the received differing common configuration elements of the target common configuration to define the complete target common configuration, based on the delta common configuration indication.

According to a fifth aspect, provided in addition to one of the first to fourth aspects, the target common configuration includes one or more of the following configuration elements:
- the delta common configuration indication,
- an identification of the target radio cell to which the target common configuration refers,
- information on how to obtain some configuration elements of the target common configuration,
- information usable by the UE to attach to the target base station, including one or more of the following:
   ∘ security algorithm information for the target radio cell,
   ∘ Time and frequency radio resources commonly usable for UEs performing a random access procedure with the target base station,
   ∘ system information of the target radio cell, such as the downlink and/or uplink frequency bandwidth part configuration
- information on geographical characteristics of the present radio cell, such as the centre location and size of that present radio cell, as well as movement information on the present base station, such as the moving direction and moving speed of the present base station,
- information on trigger conditions for a possible handover to the target base station, such as channel-quality-related conditions.

According to a sixth aspect, provided in addition to one of first to fifth aspects, the differing common configuration elements of the target common configuration are received according to one or more of the following:
- system information,
- a message broadcast by the present base station, optionally the message being according to the radio resource control, RRC, protocol,
- a message transmitted by the present base station and dedicated to the UE, optionally the message being according to the radio resource control, RRC, protocol.

In an optional implementation of the sixth aspect, one or more of the differing common configuration elements of the target common configuration are determined by a processor of the UE based on preconfigured information available at the UE and based on an identification of the target radio cell.

According to a seventh aspect provided in addition to one of the first to sixth aspects, the receiver receives the target individual configuration as a dedicated message from the present base station. In optional implementation, the target individual configuration includes information about one or more of the following:
- a dedicated random access procedure preamble to be used by the UE when performing a random access procedure when handing over to the target base station,
- an identification of the UE to be used by the UE when located in the target radio cell,
- an identification of the target radio cell, to be used by the UE to determine one out of a plurality of received target common configurations relating to a plurality of target radio cells,
- a handover time, indicating the time at which the UE is to hand over to the target base station.

According to an eighth aspect provided in addition to one of the first to seventh aspects, the UE performs a handover procedure from the present radio cell to the target radio cell using the target common configuration and the target individual configuration. In an optional implementation, the handover procedure includes that the receiver receives a handover command message from the present base station, the handover command message including the target individual configuration. In a further optional implementation, the UE does not send a handover completion message to the target base station upon completing the handover to the target radio cell.

According to a ninth aspect provided in addition to one of the first to eighth aspects, the receiver, when in operation, receives the target individual configuration according to one of the following:
- in a random access response message transmitted by the present base station, the random access response message being part of a random access procedure performed by the UE when connecting the first time to the present base station,
- together with a random access response message, transmitted by the present base station, the random access response message being part of a random access procedure performed by the UE when connecting the first time to the present base station, optionally in a message of the Radio Resource Control, RRC, protocol such as a handover command message, and
- in a message, transmitted by the present base station while the UE is communicating with the present base station, optionally in a message of the Radio Resource Control, RRC, protocol such as a handover command message that is transmitted together with user data.

According to a tenth aspect provided in addition to one of the first to ninth aspects, the delta common configuration indication indicates one out of a plurality of levels of difference. Each level of difference is associated with one or more respective differing common configuration elements. In an optional implementation, three levels of difference are defined.
- wherein the first level of difference is associated with a target cell ID as the only differing common configuration element,
- wherein the second level of difference is associated with a set of differing common configuration elements including one or more of the following:
   ∘ an identification of the target cell,
   ∘ information on time-frequency resources to be used in the uplink and downlink,
- wherein the third level of difference indicates that the majority or all of the elements of the target common configuration differ from the present common configuration.

According to an eleventh aspect, provided in addition to the tenth aspect,
∘ if the delta common configuration indication indicates the first level of difference,
   ∘ the receiver, when in operation, receives the target cell ID in an information element of a system information block, optionally system information block 1,
∘ if the delta common configuration indication indicates the second level of difference,
   ∘ the receiver, when in operation, receives the set of differing common configuration elements, optionally in one or more of a system information block, a broadcast message or a UE-specific message,
∘ if the delta common configuration indication indicates the third level of difference,
   ∘ the receiver, when in operation, receives a full target common configuration, optionally in one or more of a system information block, a broadcast message or a UE-specific message.

According to a twelfth aspect, provided in addition to one of the first to eleventh aspects, one or more of a dedicated random access procedure preamble and an identification of the UE are common among different radio cells and different radio base stations, such that the dedicated random access procedure preamble and the UE identification are common between the present individual configuration and the target individual configuration.

According to a thirteenth aspect, a method is provided including the following steps performed by a UE. The UE receives, from a present base station, a delta common configuration indication, indicating a difference between a present common configuration and a target common configuration. The present common configuration is used by the UE for communication with a present base station that controls a present radio cell in which the UE is located. The target common configuration is usable by the UE for communication with a target base station. The UE further receives, from the present base station, differing common configuration elements of the target common configuration, based on the received delta common configuration indication. The differing common configuration elements are different between the present common configuration and the target common configuration. Moreover, the UE receives, from the present base station, a target individual configuration to be used by the UE for communication with the target base station.

According to a fourteenth aspect, a base station is provided. In the present case, the radio base station acts as the present/source/serving base station to a UE. A transmitter of the base station transmits, to a user equipment, UE, a delta common configuration indication, indicating a difference between a present common configuration and a target common configuration. The present common configuration is used by the UE for communication with the base station that controls a radio cell in which the UE is located. The target common configuration is usable by the UE for communication with a target base station. The transmitter transmits, to the UE, differing common configuration elements of the target common configuration, based on the transmitted delta common configuration indication. The differing common configuration elements are different between the present common configuration and the target common configuration. The transmitter transmits, to the UE, a target individual configuration to be used by the UE for communication with the target base station.

According to a fifteenth aspect, a method is provided including the following steps performed by a base station. The base station transmits, to a user equipment, UE, a delta common configuration indication, indicating a difference between a present common configuration and a target common configuration. The present common configuration is used by the UE for communication with the base station that controls a radio cell in which the UE is located. The target common configuration is usable by the UE for communication with a target base station. The base station transmits, to the UE, differing common configuration elements of the target common configuration, based on the transmitted delta common configuration indication. The differing common configuration elements are different between the present common configuration and the target common configuration. The base station transmits, to the UE, a target individual configuration to be used by the UE for communication with the target base station.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a receiver, which in operation, receives, from a present base station, a delta common configuration indication, indicating a difference between a present common configuration and a target common configuration, the present common configuration being used by the UE for communication with a present base station that controls a present radio cell in which the UE is located, and wherein the target common configuration is usable by the UE for communication with a target base station,
the receiver, which in operation, receives, from the present base station, differing common configuration elements of the target common configuration, based on the received delta common configuration indication, the differing common configuration elements being different between the present common configuration and the target common configuration, and
the receiver, which in operation receives, from the present base station, a target individual configuration to be used by the UE for communication with the target base station.

2. The UE according to claim 1, wherein a processor, when in operation, uses a present individual configuration together with the present common configuration, for communication with the present base station,
wherein the present common configuration and the present individual configuration are received from the present base station, at least in part via system information broadcast and in part via UE-dedicated control messages,
or
wherein the present common configuration and the present individual configuration are received from a previous source base station from which the UE handed over to the present base station.

3. The UE according to claim 1 or 2, wherein the present common configuration includes configuration elements that are common among a plurality of UEs that are communicating with the present base station, and
the present individual configuration includes configuration elements that are specific to the UE communicating with the present base station.

4. The UE according to any of claims 1 to 3, wherein a processor of the UE, when in operation, determines, based on the delta common configuration indication, the differing common configuration elements that are different between the present common configuration and the target common configuration, and
wherein the processor, when in operation, combines the present common configuration with the received differing common configuration elements of the target common configuration to define the complete target common configuration, based on the delta common configuration indication.

5. The UE according to one of claims 1 to 4, wherein the target common configuration includes one or more of the following configuration elements:
• the delta common configuration indication,
• an identification of the target radio cell to which the target common configuration refers,
• information on how to obtain some configuration elements of the target common configuration,
• information usable by the UE to attach to the target base station, including one or more of the following:
∘ security algorithm information for the target radio cell,
∘ Time and frequency radio resources commonly usable for UEs performing a random access procedure with the target base station,
∘ system information of the target radio cell, such as the downlink and/or uplink frequency bandwidth part configuration
• information on geographical characteristics of the present radio cell, such as the centre location and size of that present radio cell, as well as movement information on the present base station, such as the moving direction and moving speed of the present base station,
• information on trigger conditions for a possible handover to the target base station, such as channel-quality-related conditions.

6. The UE according to any one of claims 1 to 5, wherein the differing common configuration elements of the target common configuration are received according to one or more of the following:
∘ system information,
∘ a message broadcast by the present base station, optionally the message being according to the radio resource control, RRC, protocol,
∘ a message transmitted by the present base station and dedicated to the UE, optionally the message being according to the radio resource control, RRC, protocol,
optionally wherein one or more of the differing common configuration elements of the target common configuration are determined by a processor of the UE based on preconfigured information available at the UE and based on an identification of the target radio cell.

7. The UE according to and one of claims 1 to 6, wherein the receiver, when in operation, receives the target individual configuration as a dedicated message from the present base station,
optionally wherein the target individual configuration includes information about one or more of the following:
• a dedicated random access procedure preamble to be used by the UE when performing a random access procedure when handing over to the target base station,
• an identification of the UE to be used by the UE when located in the target radio cell,
• an identification of the target radio cell, to be used by the UE to determine one out of a plurality of received target common configurations relating to a plurality of target radio cells,
• a handover time, indicating the time at which the UE is to hand over to the target base station.

8. The UE according to any one of claims 1 to 7, wherein the UE performs a handover procedure from the present radio cell to the target radio cell using the target common configuration and the target individual configuration,
optionally wherein the handover procedure includes that the receiver, when in operation, receives a handover command message from the present base station, the handover command message including the target individual configuration,
optionally wherein the UE does not send a handover completion message to the target base station upon completing the handover to the target radio cell.

9. The UE according to one of claims 1 to 8, wherein the receiver, when in operation, receives the target individual configuration according to one of the following:
∘ in a random access response message transmitted by the present base station, the random access response message being part of a random access procedure performed by the UE when connecting the first time to the present base station,
∘ together with a random access response message, transmitted by the present base station, the random access response message being part of a random access procedure performed by the UE when connecting the first time to the present base station, optionally in a message of the Radio Resource Control, RRC, protocol such as a handover command message, and
∘ in a message, transmitted by the present base station while the UE is communicating with the present base station, optionally in a message of the Radio Resource Control, RRC, protocol such as a handover command message that is transmitted together with user data.

10. The UE according to any one of claims 1 to 9, wherein the delta common configuration indication indicates one out of a plurality of levels of difference,
wherein each level of difference is associated with one or more respective differing common configuration elements,
optionally wherein three levels of difference are defined,
• wherein the first level of difference is associated with a target cell ID as the only differing common configuration element,
• wherein the second level of difference is associated with a set of differing common configuration elements including one or more of the following:
∘ an identification of the target cell,
∘ information on time-frequency resources to be used in the uplink and downlink,
• wherein the third level of difference indicates that the majority or all of the elements of the target common configuration differ from the present common configuration.

11. The UE according to claim 10, wherein
∘ if the delta common configuration indication indicates the first level of difference,
∘ the receiver, when in operation, receives the target cell ID in an information element of a system information block, optionally system information block 1,
∘ if the delta common configuration indication indicates the second level of difference,
∘ the receiver, when in operation, receives the set of differing common configuration elements, optionally in one or more of a system information block, a broadcast message or a UE-specific message,
∘ if the delta common configuration indication indicates the third level of difference,
∘ the receiver, when in operation, receives a full target common configuration, optionally in one or more of a system information block, a broadcast message or a UE-specific message.

12. The UE according to any one of claims 1 to 11, wherein one or more of a dedicated random access procedure preamble and an identification of the UE are common among different radio cells and different radio base stations, such that the dedicated random access procedure preamble and the UE identification are common between the present individual configuration and the target individual configuration.

13. A method comprising the following steps performed by a user equipment, UE:
receiving, from a present base station, a delta common configuration indication, indicating a difference between a present common configuration and a target common configuration, the present common configuration being used by the UE for communication with a present base station that controls a present radio cell in which the UE is located, and wherein the target common configuration is usable by the UE for communication with a target base station,
receiving, from the present base station, differing common configuration elements of the target common configuration, based on the received delta common configuration indication, the differing common configuration elements being different between the present common configuration and the target common configuration, and
receiving, from the present base station, a target individual configuration to be used by the UE for communication with the target base station.

14. A base station comprising:
a transmitter, which in operation, transmits, to a user equipment, UE, a delta common configuration indication, indicating a difference between a present common configuration and a target common configuration, the present common configuration being used by the UE for communication with the base station that controls a radio cell in which the UE is located, and wherein the target common configuration is usable by the UE for communication with a target base station,
the transmitter, which in operation, transmits, to the UE, differing common configuration elements of the target common configuration, based on the transmitted delta common configuration indication, the differing common configuration elements being different between the present common configuration and the target common configuration, and
the transmitter, which in operation, transmits, to the UE, a target individual configuration to be used by the UE for communication with the target base station.

15. A method comprising the following steps performed by a base station:
transmitting, to a user equipment, UE, a delta common configuration indication, indicating a difference between a present common configuration and a target common configuration, the present common configuration being used by the UE for communication with the base station that controls a radio cell in which the UE is located, and wherein the target common configuration is usable by the UE for communication with a target base station,
transmitting, to the UE, differing common configuration elements of the target common configuration, based on the transmitted delta common configuration indication, the differing common configuration elements being different between the present common configuration and the target common configuration, and
transmitting, to the UE, a target individual configuration to be used by the UE for communication with the target base station.
